# EUROPEAN PATENT SPECIFICATION

(11) **EP 4 583 122 B1**
(45) Date of publication and mention of the grant of the patent: **05.11.2025**
(21) Application number: 24150599.9
(22) Date of filing: 05.01.2024
(51) Int. Cl.: G21K 1/00, G06N 10/40, G06N 10/00

(54) **ION TRAP APPARATUS**
IONENFALLE
APPAREIL DE PIÈGE À IONS

(43) Date of publication of application: 09.07.2025
(73) Proprietor: QUDORA Technologies GmbH, 38100 Braunschweig (DE)
(72) Inventor: BAUTISTA-SALVADOR, Amado, 38100 Braunschweig (DE); ZARANTONELLO, Giorgio, 38100 Braunschweig (DE); HAHN, Henning, 38100 Braunschweig (DE)
(74) Representative: Betten & Resch

(56) References cited:
- EP-A1- 4 354 463
- US-A1- 2023 009 741
- US-B1- 11 056 332

## Description

### TECHNICAL FIELD

The present disclosure relates to an ion trap apparatus that e.g. may be used for quantum computing, and to a method of producing an ion trap apparatus.

### BACKGROUND

Ion traps are a promising candidate for the realization of quantum computers, and are frequently used for atomic clocks/frequency standards, and as quantum sensors. Ion traps allow to trap, store and manipulate single and multiple charged particles and to make use of their quantum nature. In a quantum computer, single trapped ions may be used as individual qubits.

EP 3 979 299 A1 discloses a device for controlling trapped ions that includes a first substrate. A second substrate is disposed over the first substrate. One or a plurality of first level ion traps is configured to trap ions in a space between the first substrate and the second substrate. One or a plurality of second level ion traps is configured to trap ions in a space above the second substrate. An opening in the second substrate is provided through which ions can be transferred between a first level ion trap and a second level ion trap.

EP 4 120 290 A1 discloses a device for controlling trapped ions that includes a first semiconductor substrate comprising a semiconductor and/or dielectric material. A first micro-fabricated electrode structure is disposed at a main side of the first substrate. The device further includes a second substrate comprising a semiconductor and/or dielectric material. A second micro-fabricated electrode structure is disposed at a main side of the second substrate opposite the main side of the first substrate. A plurality of spacer members is disposed between the first substrate and the second substrate. At least one ion trap is configured to trap ions in a space between the first substrate and the second substrate. The first micro-fabricated electrode structure and the second micro-fabricated electrode structure comprise electrodes of the ion trap. A multi-layer metal interconnect is formed in the first substrate and electrically connected to the first micro-fabricated electrode structure.

US 2023/009741 A1 discloses a device for controlling trapped ions that includes a first substrate of a semiconductor and/or dielectric material. A first metal structure is disposed at a main side of the first substrate. The device further includes a second substrate of a semiconductor and/or dielectric material. A second metal structure is disposed at a main side of the second substrate opposite the main side of the first substrate. A spacer is disposed between and bonded to the first and second substrates. The spacer includes an electrical interconnect which electrically connects the first metal structure to the second metal structure. A bond between the spacer and the first substrate or the spacer and the second substrate is a bond formed by waferbonding. At least one ion trap is configured to trap ions in a space between the first and second substrates, the first and second metal structures including electrodes of the ion trap.

### SUMMARY

It is an object of the present disclosure to provide an ion trap apparatus that allows to store and manipulate one or more ions, to isolate the trapped ions well from environmental conditions that can cause decoherence, and to achieve a high fidelity when conducting gate operations on ions trapped in the ion trap. It is also an object of the present disclosure to provide a method of producing such an ion trap apparatus.

The present invention is defined by the independent claims. Dependent claims specify embodiments thereof.

According to a first aspect of the present disclosure, an ion trap apparatus is provided. The ion trap apparatus comprises a first substrate and a second substrate, each comprising a respective main surface. The first substrate and the second substrate are arranged such that the main surfaces (of the first substrate and of the second substrate) are facing towards each other. The ion trap apparatus comprises an ion trap located between the main surface of the first substrate and the main surface of the second substrate. The ion trap apparatus comprises a radiofrequency, RF, electrode set. The first substrate supports all RF electrodes of the RF electrode set. The RF electrode set is configured to provide an RF trapping potential of the ion trap, the RF trapping potential being above the main surface of the first substrate. The ion trap apparatus comprises a direct current/voltage, DC, electrode set. The second substrate supports one or more, optionally all, DC electrodes of the DC electrode set. The DC electrode set is configured to provide a DC trapping potential of the ion trap, the DC trapping potential being above the main surface of the second substrate. The first substrate further supports at least one of: an optical waveguide configured to provide optical access to an ion trapped in the ion trap, and a microwave electrode configured to provide a microwave field configured to perform and/or to be used in a gate operation on an ion trapped in the ion trap. Optionally, the microwave electrode may be configured to generate a microwave magnetic near-field in the ion trap, the microwave magnetic near-field comprising a gradient.

Implementations of aspects of the present disclosure allow to support all position-sensitive components/position-critical components of the ion trap apparatus by the first substrate. This may alleviate the need for precise alignment of the first substrate with respect to the second substrate. It also allows to reduce misalignment of position-sensitive components with respect to each other.

A position-sensitive/position-critical component may be a component whose alignment, e.g. with respect to the position of an ion trapped in the ion trap, is critical.

E.g., when coupling (laser) light/an optical signal onto a trapped ion, it is important to have the ion well aligned to the focus of the optical signal coupled onto the ion. If there is a misalignment between the RF-null of the RF trapping potential of the ion trap and the focus of the optical signal, it may be necessary to shift the ion position by applying DC correction voltages to one or more of the DC electrodes. Shifting the ion away from the RF-null may induce micromotion, which is detrimental to the fidelity/the quality of the ion trap.

E.g., when providing a microwave field to a trapped ion/when performing a gate operation on a trapped ion, it is important to have the ion well aligned with the microwave field (e.g., with the (magnetic quadrupole) minimum of the microwave field). If there is a misalignment between the RF-null of the RF trapping potential of the ion trap and the microwave field (e.g., its minimum), it may be necessary to shift the ion position by applying DC correction voltages to one or more of the DC electrodes. Shifting the ion away from the RF-null may induce micromotion, which is detrimental to the fidelity/the quality of the ion trap.

The position of an ion trapped in the ion trap may also be referred to as the center of the trap.

The null position of an ion trapped in the ion trap, e.g. the minimum of the total potential (the overall confining potential due to RF trapping potential and DC trapping potential) of the ion trap, is mostly defined by the geometry of the RF electrodes of the RF electrode set. A misalignment of the DC trapping potential with respect to the RF trapping potential/the (RF) null position can be easily corrected by applying correction voltages to electrodes of the DC electrode set. E.g., it is possible to minimize such a misalignment to below 100 nm, e.g. to a few 10s of nm. Hence, the position of the DC electrodes of the DC electrode set may be considered as non-position sensitive/critical, and the DC electrodes of the DC electrode set may be considered as non-position sensitive/critical components.

In the present disclosure, an ion trapped in the ion trap may be assumed to be located at the minimum of the total potential of the ion trap. These terms may be used interchangeably/in the same context/with the same meaning, unless specified otherwise and unless otherwise contradictory.

The terms "trapped ion" and "ion trapped in the ion trap" may be used interchangeably/in the same context/with the same meaning, unless specified otherwise and unless otherwise contradictory.

Having two substrates, arranged above each other, that respectively provide the RF trapping potential and the DC trapping potential, allows for high trap depths as compared to conventional surface traps, in which the RF electrode set and the DC electrode set are supported by the same substrate.

The ion trap apparatus may be used for quantum computing. E.g., the present ion trap apparatus may be/may be comprised in a quantum computer.

The ion trap apparatus may be used for an (atomic) clock/for a frequency standard. E.g., the present ion trap apparatus may be/may be comprised in an (atomic) clock/a frequency standard.

The ion trap apparatus may be used for quantum sensing. E.g., the present ion trap apparatus may be/may be comprised in a quantum sensing apparatus/a quantum sensor.

The ion trap may be configured to trap one or more ions therein. Each ion may be an individual qubit of a quantum computer. Alternatively, an individual qubit of a quantum computer may be formed by a plurality of ions trapped in the ion trap, or in a plurality of ion traps.

The ion trap/the ion trap apparatus may be configured to trap and/or manipulate an ion in the ion trap. The ion trapped in the ion trap may be one of the following species: Ba⁺, Be⁺, Ca⁺, Mg⁺, Sr⁺, Yb⁺. The ion trap may also be configured to trap ions of a plurality of species, e.g. double species. E.g., the ion trap apparatus may be configured to perform (sympathetic) cooling via ions of one ion species, and computation via ions of another ion species.

The ion trap/the ion trap apparatus may be configured to trap charged atomic particles and/or molecular particles, e.g. single, doubly or highly ionized particles, e.g. single particles and/or plurality of particles.

The ion trap may be any type of ion trap. E.g., the ion trap may be a Paul trap, which sometimes is also referred to as "RF trap" and/or as "Quadrupole ion trap". The ion trap may also be a (planar) Penning trap and/or a combination of a Paul trap and a Penning trap.

The ion trap apparatus may also comprise a plurality of ion traps, e.g. ion traps that have different tasks such as detection, cooling and/or performing quantum gates. The ion trap apparatus may comprise one or more ion traps for each respective tasks, e.g. one or more detection ion traps, one or more cooling ion traps, and/or one or more manipulation/computation/gate ion traps.

The term "substrate", as used in "first/second substrate", should not be understood as exclusively relating to a wafer. The term "substrate" may also relate to a die/parts of a wafer.

The first substrate may support components, e.g. all, of the ion trap apparatus that are position-sensitive. The first substrate may also support non-position sensitive components. The second substrate may support non-position sensitive components.

The first substrate may support, e.g. some or all, RF components of the ion trap apparatus. The second substrate may support, e.g. some or all, DC components of the ion trap apparatus. The second substrate and/or components supported thereby may be provided by standard semiconductor fabrication processes such as CMOS. E.g., the second substrate may comprise/may support integrated electronics.

The DC electrodes of the set DC electrodes may comprise an aluminum alloy and may be manufactured by standard semiconductor fabrication processes such as CMOS.

The DC electrodes of the set DC electrodes may comprise a Cu, Nb, Al and/or Au layer (as a conductive material), and/or a multilayer combination thereof. The DC electrodes of the set DC electrodes may be manufactured by means of a separate process, e.g. a post-CMOS process (which may also be referred to as a BEOL, back end of line, process), like evaporation or electroplating of Cu, Nb, Al and/or Au. One or more of Ti, Cr, TaN, Pt may be used as an adhesion promotor and/or as a diffusion barrier.

The conductive electrodes described herein (e.g., DC electrodes and/or RF electrodes and/or microwave electrode), may have an additional adhesion promoter layer (e.g. Ti, Cr, TaN, TiN, Pt, Pd) or a combination of them) to adhere the metal electrodes, e.g. to underlying dielectrics. The adhesion promoter is not shown in the figures for reasons of clarity.

Components that are manufactured by standard semiconductor fabrication processes such as CMOS may be manufactured and tested, and may then be mounted e.g. to the first substrate and/or the second substrate.

The present disclosure allows to allocate/assign components to the first substrate and the second substrate based on corresponding fabrication technologies, and also based on their RF properties, and also based on their position sensitivity.

The first substrate may support a plurality of optical waveguides, each of which may be configured to provide optical access to an ion trapped in the ion trap. Features disclosed with respect to one optical waveguide also apply to the plurality of optical waveguides, unless specified otherwise and unless contradictory. E.g., it is possible to have one or more optical waveguides for cooling, and e.g. another optical waveguide for fluorescence-based state detection, and e.g. another optical waveguide for performing gate operations.

E.g., for cooling, a plurality of optical waveguides may be beneficial or even required due to polarization requirements of the output coupler of the respective optical waveguides.

Features disclosed with respect to one component may also apply to the plurality of components/each component of the plurality of components, unless specified otherwise and unless contradictory.

The RF trapping potential may have a frequency of 1 MHz or more. The RF trapping potential may have a frequency of 200 MHz or less. An RF signal of one electrode of the RF electrode set may have a frequency of 1 MHz or more. An RF signal of one electrode of the RF electrode set may have a frequency of 200 MHz or less.

Surfaces of the first substrate and/or the second substrate, e.g., the respective main surfaces, that have a direct line of sight to an ion trapped in the ion trap/a position of an ion when trapped in the ion trap, may be respectively coated with a conductive layer, e.g. a metal layer, to avoid built-up of parasitic charges and to avoid uncontrolled e-fields from built-up charges on dielectric surfaces. Also surfaces of the optical waveguide (e.g., its respective output couplers) that have a direct line of sight to an ion trapped in the ion trap/a position of an ion when trapped in the ion trap, may be coated with a conductive layer, e.g. with a transparent conductive coating to avoid built-up of parasitic charges and to avoid uncontrolled e-fields from built-up charges on dielectric surfaces.

The first substrate supports all RF electrodes of the RF electrode set, on its main surface. The second substrate may support the one or more, optionally all, DC electrodes of the DC electrode set, on its main surface. The first substrate may support the optical waveguide, and/or its output coupler and/or its input coupler, on its main surface. In other words: The RF electrodes, the DC electrodes and also the microwave electrode (discussed further below) may be formed on top of the respective main surfaces.

The one or more, optionally all, RF electrodes of the RF electrode set e.g. may be (partly or fully) embedded/integrated into the first substrate. The one or more, optionally all, DC electrodes of the DC electrode set e.g. may be (partly or fully) embedded/integrated into the second substrate. The microwave electrode e.g. may be (partly or fully) embedded/integrated into the first substrate.

A component "supported" by a substrate may refer to a component being located on a surface of the substrate. It may also refer to the component being (partly or fully) embedded/integrated into the first substrate.

One or more DC electrodes of the DC electrode set may be grounded. Also grounded DC electrodes may be referred to as "DC electrodes".

DC electrodes supported by the second substrate may be isolated, e.g. by an insulating layer/routing layer, e.g. arranged between each of the DC electrodes and the second substrate, which may also add mechanical support. This insulating layer/routing layer may also comprise conductive pathways, e.g. connected to DACs, and may act as/may be a routing layer. Each DC electrode supported by the second substrate may also have its individual insulating layer/routing layer arranged between the respective DC electrode and the second substrate (e.g., the insulating layer/routing layer may be removed in a space below a gap between two neighboring electrodes).

The second substrate may also support additional DC electrodes that may be used for shimming and/or for compensating for stray electric fields. E.g., these additional DC electrodes do not necessarily contribute to/provide the DC trapping potential.

The optical waveguide may comprise an output coupler configured to irradiate an optical signal onto an ion trapped in the ion trap. The optical waveguide/an output coupler thereof may be located in direct line of sight to an ion trapped in the ion trap/of a minimum of the total potential of the ion trap/a position of an ion when trapped in the ion trap. The optical waveguide may be configured to irradiate an optical signal onto an ion trapped in the ion trap.

Having a direct line of sight between two objects, e.g. between the optical waveguide and a trapped ion/a position of an ion when trapped in the ion trap, may refer to no additional component being present in-between the two objects, e.g. in between the optical waveguide and the trapped ion/the position of an ion when trapped in the ion trap.

The optical waveguide may be made of/may comprise at least one of the following materials: AIN, Al₂O₃, Ge:SiO₂, InP, LiNbO₃, Si, SiN, SiO₂, SiON.

The optical waveguide may also comprise an input coupler configured to receive an optical signal and/or configured to couple an optical signal into the optical waveguide (which may be sent to the ion later on). The input coupler may be located in the first substrate, e.g. at an edge position of the first substrate, e.g. supported on the main surface of the first substrate.

The optical signal may be a cooling signal (e.g., for Doppler cooling and/or (resolved) sideband cooling and/or electromagnetically induced transparency cooling, EIT cooling). The optical signal may be a readout signal, e.g. for fluorescence-based state detection. The optical signal may be configured to perform and/or to be used in a gate operation on an ion trapped in the ion trap, and/or in a gate operation on a plurality of ions trapped in the ion trap, e.g. simultaneously.

An optical signal from an ion trapped in the ion trap may be received by a photon detector, e.g. a single photon detector. An optical signal from an ion trapped in the ion trap may be a readout signal.

The microwave electrode may be configured to provide a microwave field configured to cool an ion trapped in the ion trap, e.g. by means of sideband cooling. E.g., a repumping optical signal may be used in addition.

The microwave field may have a zero or nearly zero absolute value at a minimum of the total potential of the ion trap. The microwave electrode may be aligned with respect to the RF electrode set. Ideally the RF null may be perfectly overlapped with the magnetic quadrupole minimum of the microwave electrode (e.g., when performing an entangling gate operation on a plurality of ions simultaneously trapped in the ion trap). Hence, it is beneficial to have one or more, optionally all, RF electrodes of the RF electrode set and the microwave electrode to be supported by the same substrate (i.e., the first substrate) to ensure this overlap (in a similar fashion as for the optical waveguides and the RF electrodes of the RF electrode set).

Having the first substrate supporting both one or more RF electrodes of the RF electrode set and the microwave electrode allows to (intrinsically) align the microwave electrode very well with the RF electrode set.

The gate operations may comprise single qubit gates, e.g. on a single ions trapped in the ion trap. The gate operations may comprise multi-qubit gates (e.g., on two qubits), e.g. on two ions/multiple qubits trapped (simultaneously) in the ion trap.

Single qubit gates may be understood as rotations on the Bloch sphere. Single qubit gates e.g. may be performed by means of the microwave magnetic near-field properties, e.g. (in some implementations) having a non-zero absolute value.

Multi-qubit gates may comprise entangling gates that can generate entanglement between a plurality of qubits, e.g. between a plurality of ions simultaneously trapped in the ion trap. Multi qubit gates e.g. may be performed by means of the microwave magnetic near-field gradient, e.g. in some implementations at a position at which the microwave magnetic near-field has a zero or nearly zero absolute value.

Also other schemes for performing single qubit gates and multi-qubit gates by employing the microwave field provided by the microwave electrode may be used.

RF electrodes supported by the first substrate may be isolated, e.g. by an insulating layer/routing layer, e.g. arranged between each of the RF electrodes and the first substrate, which may also add mechanical support. This insulating layer/routing layer may also comprise conductive pathways/(a radiofrequency and/or a microwave) waveguide and may act as a routing layer.

The RF electrodes of the set of RF electrodes, i.e. all RF electrodes of the set of RF electrodes supported by the first substrate, may be connected with each other. This may allow to use a single radiofrequency source, which may be beneficial in terms of phase stability/phase shifts between the RF electrodes.

The microwave electrode may be configured to provide a microwave field configured to entangle two or more ions that are simultaneously trapped in the ion trap. The microwave electrode may be configured to provide a microwave field configured to perform and/or to be used in a gate operation on a plurality of ions trapped (e.g., simultaneously) in the ion trap.

The microwave electrode e.g. may be a coplanar waveguide.

The microwave electrode e.g. may be a meander electrode, as e.g. described in Carsjens et. al., "Surface-electrode Paul trap with optimized near-field microwave control", Appl. Phys. B 114, 243 (2014), doi: 10.1007/s00340-013-5689-6 or in Hahn, Zarantonello et al., "Multilayer ion trap with three-dimensional microwave circuitry for scalable quantum logic applications", Appl. Phys. B, 125, 154 (2019), doi: 10.1007/s00340-019-7265-1.

The microwave electrode e.g. may be a trident electrode.

The microwave electrode supported by the first substrate may be isolated, e.g. by an insulating layer/routing layer, e.g. arranged between the microwave electrode and the first substrate, which may also add mechanical support. This insulating layer/routing layer may also comprise conductive pathways/ (a microwave and/or a radiofrequency) waveguide and may act as a routing layer.

The microwave field may have a frequency of 500 MHz or more. The microwave field may have a frequency of 50 GHz or less. A microwave signal of the microwave electrode may have a frequency of 500 MHz or more. A microwave signal of the microwave electrode may have a frequency of 50 GHz or less.

The microwave field may have a frequency of 1 MHz or more. The microwave field may have a frequency of 50 GHz or less. A microwave signal of the microwave electrode may have a frequency of 1 MHz or more. A microwave signal of the microwave electrode may have a frequency of 50 GHz or less.

The frequency of the microwave field may be chosen based on the ion species used. E.g., for Be, a microwave frequency of about 1 GHz may be used. E.g., for ²⁵Mg, a microwave frequency of about 2 GHz may be used. E.g., for Ca, a microwave frequency of about 3 GHz may be used. E.g., for ⁸⁷Sr, a microwave frequency of about 5 GHz may be used. E.g., for ¹³⁵Ba, a microwave frequency of about 8 GHz may be used. E.g., for Yb, a microwave frequency of about 12 GHz may be used.

E.g., for low-field Zeeman qubits that do not use a hyperfine-structure transition, e.g. ²⁴Mg, ⁴⁰Ca, ⁸⁶Sr, ⁸⁸Sr, Ba, ¹⁷²Yb, ¹⁷⁴Yb, microwave frequencies of 1 MHz or more may be used.

The first substrate may further support the other one of: the optical waveguide and the microwave electrode.

The first substrate may support a plurality of optical waveguides, each being configured to provide optical access to an ion trapped in the ion trap.

The first substrate may support a plurality of optical waveguides, each being configured to provide optical access to an ion trapped in the ion trap, and e.g. the microwave electrode.

The first substrate may support a radiofrequency waveguide configured to provide a radiofrequency signal to one of the RF electrodes (supported on the first substrate). The first substrate may support a microwave waveguide configured to provide a microwave signal to the microwave electrode (supported on the first substrate).

A voltage of the radiofrequency signal e.g. may be 1 Vpp or more. A voltage of the radiofrequency signal e.g. may be 50 Vpp or more. A voltage of the radiofrequency signal e.g. may be 1000 Vpp or less.

A current of the microwave signal may be 1 mA or more.

The first substrate may comprise at least one high voltage component, e.g. at least one component having a voltage of above 100 Vpp.

The first substrate may also support further RF components, such as capacitive couplers and/or resonators. The further RF components e.g. may implement advanced functionalities such as impedance matching of microwave signals. A resonator may allow to minimize a power of radiofrequency signals needed that are provided to the first substrate/components supported thereby.

The radiofrequency waveguide and/or the microwave waveguide may be (partly or fully) embedded/integrated into the first substrate.

The first substrate may further support a DC electrode. The DC electrode may be configured to provide a DC potential above the main surface of the first substrate.

The DC electrode supported by the first substrate may be a DC electrode of the DC electrode set, i.e. it may also contribute to the DC trapping potential.

The DC electrode supported by the first substrate may also be a shim electrode that may be configured to compensate for stray electric fields.

The second substrate may support a larger number of DC electrodes as compared to the first substrate.

The first substrate may also comprise a plurality of DC electrodes. The plurality of DC electrodes supported by the first substrate may be configured to respectively provide a DC potential above the main surface of the first substrate. Features disclosed with respect to one DC electrode supported by the first substrate may equally apply to each of the plurality of DC electrodes supported by the first substrate, unless otherwise stated and unless contradictory.

The ion trap apparatus may further comprise at least one photon detector. The at least one photon detector may be arranged to have a direct line of sight to a position of an ion when trapped in the ion trap, e.g. respectively. The at least one photon detector may be configured to receive an optical signal of the ion when trapped in the ion trap, e.g. respectively. The at least one photon detector may be supported by the first substrate and/or by the second substrate, e.g. respectively.

Having a (single) photon detector with a direct line of sight to a position of an ion when trapped in the ion trap allows for integrated detection of optical signals of the ion, which may allow for high scalability (e.g., in order to scale the ion trap apparatus to a larger number of trapped ions/qubits) and which may allow for improved readout efficiency.

The optical signal of the ion may be a readout signal. A readout signal may refer to an optical signal that is a state-dependent fluorescence signal of a trapped ion, e.g. depending on an internal state of the trapped ion. As such photons may be emitted into various directions, a single photon detector may be considered as a non-position-critical/non-position-sensitive component.

The at least one photon detector may be a single photon detector, e.g. a single photon avalanche detector (SPAD), or a superconducting nanowire single-photon detector (SNSPD). Features disclosed with respect to one photon detector may equally apply to other photon detectors, unless otherwise stated and unless contradictory.

The photon detector may comprise/may have a transparent conductive coating/film to avoid built-up of parasitic charges, e.g. to avoid uncontrolled e-fields from built-up charges on dielectric surfaces. Due to the transparency of the conductive coating/film, photons can be collected by the photon detector.

The ion trap apparatus may also comprise at least one photon detector supported by the first substrate, and at least one photon detector supported by the second substrate.

A photon detector supported by the second substrate may e.g. be a SPAD. SPADs can be manufactured using standard semiconductor fabrication processes such as CMOS. Thus, having a SPAD supported by the second substrate allows for a simplified manufacturing process.

A SPAD can also be fabricated using standard semiconductor fabrication processes such as CMOS, and may then be mounted on the first substrate. A photon detector supported by the first substrate may e.g. be a SPAD.

The photon detector supported by the first substrate may e.g. be an SNSPD. The photon detector supported by the second substrate may e.g. be an SNSPD. An SNSPD may be placed on the first substrate and/or on the second substrate, e.g. by using post CMOS processes (which may also be referred to as BEOL, back end of line, processes).

Having a direct line of sight between the photon detector and a trapped ion/a position of an ion when trapped in the ion trap e.g. may refer to that there is no waveguide in-between the photon detector and the trapped ion/a position of the ion when trapped in the ion trap.

The second substrate may further support/comprise integrated electronics. The integrated electronics may be configured to provide a DC voltage to one of the DC electrodes supported by the second substrate. The integrated electronics may optionally comprise one or more Digital-to-analog converters, DACs.

Integrated electronics may allow for high scalability. For production of the integrated electronics, standard semiconductor fabrication processes such as CMOS may be used, which have a high reliability and are well established.

The integrated electronics may be configured to control a respective DC voltage supplied to/provided to the one or more DC electrodes supported by the second substrate. The integrated electronics may comprise integrated circuit logic, e.g. manufactured by standard semiconductor fabrication processes such as CMOS. This may have the advantage that the integrated electronics can be integrated very well.

The one or more DACs may be configured to provide a DC voltage to a respective DC electrode supported on the second substrate.

The integrated electronics may comprise integrated circuit logic, e.g. manufactured by standard semiconductor fabrication processes such as CMOS.

The integrated electronics may comprise at least one: interconnects, feedlines and/or vias.

The integrated electronics e.g. may be (partly or fully) embedded/integrated into the second substrate.

E.g., in some implementations the integrated electronics may be monolithically integrated into the second substrate. E.g., in some implementations a first layer of the integrated electronics (e.g., a circuit thereof) may be embedded in the second substrate and the additional layers of the integrated electronics (e.g., the circuit thereof) may be built on top (depending on design complexity)/ may be grown on top of each other. Then, DC electrodes may be defined in a separate process, e.g. a post-CMOS/BEOL process, on top of second substrate.

E.g., in some implementations, the second substrate may comprise/may be composed of a stack of two substrate: a substrate supporting dedicated DC electrodes attached/bonded thereto/provided thereon, and a dedicated substrate with integrated electronics, e.g. manufactured by a standard semiconductor fabrication processes such as CMOS.

The integrated electronics may comprise integrated circuits.

A loss tangent of the first substrate/of its material may be lower as compared to a loss tangent of the second substrate/of its material. Optionally, the first substrate may comprise a dielectric material. The dielectric material may optionally comprise at least one of the following materials: AIN, Al₂O₃ (e.g., sapphire), BeO, diamond, SiN and SiO₂ (e.g., Quartz and/or fused silica). Optionally, the second substrate may comprise a semiconductor material. The semiconductor material may optionally comprise at least one of the following materials: silicon, SiC, GaN, graphene.

A loss tangent of the first substrate may be below 1x10⁻³, e.g. at 293 K and at 10 MHz. A loss tangent of the second substrate may be above 1x10⁻³, e.g. at 293 K and at 10 MHz.

This may allow to support components that are RF-critical by the first substrate, and to support non-RF-critical components by the second substrate. For the second substrate, and for its components, a standard semiconductor fabrication processes such as CMOS may be used.

An RF-critical component may be a component that provides, carries and/or receives an RF signal, e.g. an RF electrode or an RF waveguide. Also, the microwave waveguide and the microwave electrode may be RF-critical in this sense.

E.g., a DAC and a DC electrode may be considered as non-RF-critical.

The RF electrodes and/or the DC electrodes and/or the microwave electrode may be multilayer electrodes, e.g. provided/located/supported on the first and/or second substrate (e.g. on the respective substrate they are supported by, e.g. on the respective main surface). One or more of the multilayer electrodes may comprise at least one dielectric layer in between electrode layers of the respective multilayer electrode.

The RF electrodes and/or the DC electrodes and/or the microwave electrodes may also be single-layer electrodes. It is also possible to use multilayer geometries for some of the electrodes and single-layer geometries for other of the electrodes.

E.g., electrodes supported by the second substrate may also be single-layer electrodes. E.g., integrated electronics supported by the second substrate (e.g., interconnects and/or feedlines and/or vias), and also electrode pads, may be produced by means of a CMOS process. The electrode pads e.g. may be plated afterwards, e.g. gold-plated, e.g. by a post-CMOS/BEOL process, in order to provide an electrical signal/a DC voltage to the one or more DC electrodes supported by the second substrate.

The dielectric layer(s) between electrode layers of respective multilayer electrode may comprise at least one of the following materials: Polyimide, SiO₂, SiN, TEOS (Tetraethyl orthosilicate).

The dielectric layer(s) may comprise a different material as compared to a material of the first substrate and/or of the second substrate.

The ion trap apparatus may further comprise one or more insulating layers/routing layer(s), e.g. between one or more or all of the electrodes (e.g. multi-layer electrode or single-layer electrode, e.g. the DC electrodes and/or the RF electrodes and/or the microwave electrode) and the respective substrate (e.g., the first substrate and/or the second substrate). The electrodes may have a respective via/waveguide that contacts through the insulating layer/routing layer and connects to the respective electrode. The (respective) insulating layer/routing layer may also comprise conductive pathways/vias/waveguides, and may act as a routing layer. The insulating layer(s)/routing layer(s) may comprise a dielectric material/may be made of a dielectric material/may be dielectric.

The insulating layer(s)/routing layer(s) may also comprise at least one of the following materials: Polyimide, SiO₂, SiN, TEOS. Below a space between two neighboring electrodes, e.g. supported on the first substrate or on the second substrate, the insulating layer/routing layer may have been removed, e.g. by means of an etch back process/may be absent.

The insulating layer/routing layer may comprise a different material as compared to a material of the first substrate and/or of the second substrate.

The ion trap apparatus may further comprise at least one spacer element. The at least one spacer element may be configured to define a positional relationship between the first substrate and the second substrate. Optionally, the first substrate and/or the second substrate may be mounted to the at least one spacer element.

E.g., the at least one spacer element may be mounted between the first substrate and the second substrate. The spacer element may be dielectric. The spacer element may comprise/may be made of a dielectric material.

The spacer element may be made of an insulating, e.g. non-semiconducting, material. Surfaces of the spacer element that have a direct line of sight to an ion trapped in the ion trap/a position of an ion when trapped in the ion trap may be coated with a conductive layer, e.g. with a metal layer, to avoid built-up of parasitic charges and to avoid uncontrolled e-fields from built-up charges on these surfaces.

The at least one spacer element may be arranged (at least in parts or fully) between portions of the main surfaces of the first substrate and of the second substrate. The at least one spacer element may be mounted/attached/connected to the respective main surfaces of the first substrate and of the second substrate. The at least one spacer element may also be mounted/attached/connected to other respective surfaces of the first substrate and the second substrate, e.g. lateral surfaces and/or surfaces opposite from the respective main surface.

The at least one spacer element may support a photon detector, or a plurality of photon detectors. The photon detector may be arranged to have a direct line of sight to a position of an ion when trapped in the ion trap. The photon detector may be configured to receive an optical signal of the ion when trapped in the ion trap.

The photon detector may be a single photon detector, e.g. a single photon avalanche detector (SPAD), or a superconducting nanowire single-photon detector (SNSPD). Features disclosed with respect to photon detectors supported by the first substrate or the second substrate also apply to photon detectors supported by the at least one spacer element (e.g., also the at least one photon detector supported by the at least one spacer element may comprise/may have a transparent conductive coating/film).

Having a direct line of sight between the photon detector and a trapped ion/a position of an ion when trapped in the ion trap e.g. may refer to that there is no waveguide in-between the photon detector and the trapped ion/a position of the ion when trapped in the ion trap.

The at least one photon detector may be supported by the first substrate and/or by the second substrate and/or by the spacer element, e.g. respectively.

The photon detector supported by the at least one spacer may be an additional photon detector, e.g. in addition to the at least one photon detector supported by the first substrate and/or by the second substrate.

E.g., one or more, or all, of the at least on spacer element may support a respective photon detector.

The second substrate may comprise a hole. The ion trap apparatus may be configured to couple light from the optical waveguide, being supported by the first substrate, to an ion trapped in the ion trap/a position of an ion when trapped in the ion trap, and from the ion (when trapped in the ion trap) into the hole.

E.g., the hole may serve as a beam dump for an optical signal, irradiated from the optical waveguide of the first substrate onto a trapped ion. Thereby, the hole may suppress undesired back-scattering of photons, which may otherwise cause decoherence. E.g., the hole may allow the optical signal, after being irradiated onto the trapped ion, to go away without being scattered between the trap substrates.

The ion trap apparatus may be also configured such that an optical signal of the ion, e.g. an optical signal emitted by the ion, can pass through the hole and reach a detector, e.g. a photon detector, e.g. via a microarray lens. This may e.g. allow to perform optical readout, e.g. with an EMCCD camera and/or a (single) photon detector (such as a SPAD/SNSPD), e.g. from multiple sites, and e.g. simultaneously. In other words: The hole could also be used for detecting optical signals of the ion.

The hole may have a direct line of sight to an ion trapped in the ion trap/a position of an ion when trapped in the ion trap. The hole may have direct line of sight to the optical waveguide supported by the first substrate, and the direct line of sight may e.g. cross an ion trapped in the ion trap/a position of an ion when trapped in the ion trap.

The ion trap apparatus may be also configured such that an optical signal of the ion, e.g. an optical signal emitted by the ion, can pass through the hole and reach a receiver, e.g. a beam dump.

The first substrate may comprise a hole. The ion trap apparatus may be configured to couple light from the optical waveguide, being supported by the first substrate, to an ion trapped in the ion trap/a position of an ion when trapped in the ion trap, and from the ion (when trapped in the ion trap) into the hole.

The hole of the first substrate may be used for detection, as described above in the context of a hole of the second substrate. Using a hole of the first substrate for detection may have the additional advantage that the impact of stray light (e.g. from the optical signal irradiated onto the ion) may be significantly reduced, as the hole is in the first substrate which also supports the optical waveguide, i.e. this may facilitate detection in an opposite direction as to the direction in which the optical waveguide irradiates the optical signal onto the ion.

The ion trap apparatus may comprise a plurality of second substrates, including the second substrate. Each of the second substrates may support at least one DC electrode of the DC electrode set. The ion trap apparatus may comprise a gap between two of the second substrates. The ion trap apparatus may be configured to couple light from the optical waveguide, supported by the first substrate, to a position of an ion when trapped in the ion trap, and from the ion (when trapped in the ion trap) into the gap.

Such a configuration may e.g. allow to use the gap as a beam dump and/or for detection, as described above in the context of a hole in the second substrate.

Having a plurality of second substrates may also be beneficial in terms of manufacturing, e.g. it may allow easier manufacturing.

The main surfaces of each of the plurality of second substrates may be located in a plane, e.g. in a plane parallel to the main surface of the first substrate. The main surfaces of each of the plurality of second substrates may be located in a plane, e.g. in a plane parallel to a plane in which the main surfaces of each of the plurality of first surfaces are located in.

E.g., the gap between two of the second substrates may be a lateral gap, e.g. a gap in a lateral direction with respect to the respective main surfaces of the two second substrates.

The ion trap apparatus may further comprise a cryostat. The ion trap/the ion trap apparatus/electrodes thereof may be configured to operate at cryogenic temperatures. The ion trap/the ion trap apparatus/electrodes thereof may be configured to operate at temperatures above 273 K.

E.g., the ion trap may be configured to operate at below 80 K, or below 10 K, or at roughly 4.2 K. Operating at cryogenic temperatures improves the vacuum and hence also the lifetime of trapped ions, as one source of ion loss is due to collisions with molecules of background gas. Operating at cryogenic temperatures may also reduce electric field noise, e.g. due to oscillating patch potentials on surfaces of the ion trap apparatus that have a direct line of sight to a trapped ion.

Operating at room temperature, i.e. above 273 K, e.g. around 293 K, allows for a simpler setup. As the present disclosure allows for particularly high trap depths due to having the first substrate and the second substrate, the ion trap may have a comparably deep trap depth, which leads to comparably high life times of trapped ions.

The ion trap apparatus may comprise a plurality of second substrates, including the second substrate, each of the plurality of second substrates comprising a respective main surface. Each of the second substrates may be arranged such that its respective main surface is facing towards the main surface of the first substrate. The ion trap apparatus may comprise a plurality of ion traps, including the ion trap, each of the plurality of ion traps being located between the main surface of the first substrate and the main surface of one or more of the plurality of second substrates. The ion trap apparatus may comprise a plurality of RF electrode sets, including the RF electrode set. The first substrate supports all RF electrodes of the plurality of RF electrode sets. Each of the plurality of RF electrode sets may be configured to provide an RF trapping potential of a respective ion trap of the plurality of ion traps, the respective RF trapping potential being above the main surface of the first substrate. The ion trap apparatus may comprise a plurality of DC electrode sets, including the DC electrode set, wherein each of the plurality of second substrates supports one or more, optionally all, DC electrodes of a respective set of the plurality of DC electrode sets. Each of the plurality of DC electrode sets may be configured to provide a DC trapping potential of a respective ion trap of the plurality of ion traps, the respective DC trapping potential being above the main surface of the respective second substrate supporting one or more of the DC electrodes of the corresponding DC electrode set.

The first substrate may further support at least one additional optical waveguide configured to provide optical access to an ion trapped in one of the additional ion traps.

The first substrate may support a plurality of optical waveguide. Each of the plurality of ion traps may have at least one of the plurality of optical waveguides being configured to provide optical access to an ion trapped in the respective ion trap of the plurality of ion traps.

Features disclosed with respect to the optical waveguide may also apply to the additional optical waveguide/to each of the plurality of optical waveguides, unless otherwise specified and unless contradictory.

The first substrate may further support at least one additional microwave electrode configured to provide a microwave field configured to perform and/or to be used in a gate operation on an ion trapped in one of the additional ion traps. Optionally, the additional microwave electrode may be configured to generate a microwave magnetic near-field in the ion trap, the microwave magnetic near-field comprising a gradient.

The first substrate may support a plurality of microwave electrodes. Each of the plurality of ion traps may have a respective one of the plurality of microwave electrodes being configured to provide a microwave field configured to perform and/or to be used in a gate operation on an ion trapped in one of the additional ion traps.

Features disclosed with respect to the microwave electrodes may also apply to the additional microwave electrodes/to each of the plurality of microwave electrodes, unless otherwise specified and unless contradictory.

Features disclosed with respect to the second substrate may also apply to one or more of the plurality of second substrates, unless otherwise specified and unless contradictory.

The ion trap apparatus may also comprise a plurality of first substrates, including the first substrate. Each of the plurality of first substrates supports all RF electrodes of a respective set of the plurality of RF electrode sets. Each of the plurality of first substrates supports all RF electrodes of one or more of the plurality of RF electrode sets.

A number of the first substrates may be lower as compared to a number of second substrates.

Features disclosed with respect to the first substrate may also apply to one or more of the plurality of first substrates, unless otherwise specified and unless contradictory.

The main surfaces of each of the plurality of second substrates may be located in a plane, e.g. in a plane parallel to the main surface of the first substrate. The main surfaces of each of the plurality of second substrates may be located in a plane, e.g. in a plane parallel to a plane in which the main surfaces of each of the plurality of first surfaces are located in.

Having a plurality of second substrates (and optionally also of first substrates) may be beneficial in terms of manufacturing, e.g. it may allow easier manufacturing. It may also be beneficial in terms of scalability.

According to a second aspect of the present disclosure, a method of producing an ion trap apparatus is provided. The method comprises providing a first substrate comprising a main surface. The method comprises providing a radiofrequency, RF, electrode set. All RF electrodes of the RF electrode set are supported by the first substrate. The RF electrode set is configured to provide an RF trapping potential of an ion trap, the RF trapping potential being above the main surface of the first substrate. The method comprises providing at least one of: an optical waveguide and a microwave electrode. The optical waveguide and/or the microwave electrode is supported by the first substrate. The method comprises providing a second substrate comprising a main surface. The method comprises providing a direct current/voltage, DC, electrode set. One or more, optionally all, DC electrodes of the DC electrode set are supported by the second substrate. The DC electrode set is configured to provide a DC trapping potential of the ion trap, the DC trapping potential being above the main surface of the second substrate. The method comprises providing the ion trap between the main surface of the first substrate and the main surface of the second substrate. Providing the ion trap comprises arranging the first substrate and the second substrate with respect to each other such that the main surfaces are facing towards each other. The optical waveguide is configured to provide optical access to an ion trapped in the ion trap. The microwave electrode is configured to provide a microwave field configured to perform a gate operation on an ion trapped in the ion trap, wherein optionally, the microwave electrode is configured to generate a microwave magnetic near-field in the ion trap, the microwave magnetic near-field comprising a gradient.

Providing the ion trap may comprise arranging the first substrate and the second substrate such that the optical waveguide is configured to provide optical access to an ion trapped in the ion trap.

The ion trap may be provided such that the optical waveguide is configured to provide optical access to an ion trapped in the ion trap.

Providing the DC electrode set may comprise providing the one or more, optionally all, DC electrodes supported by the second substrate by means of a standard semiconductor fabrication process such as CMOS. Providing the DC electrode set may also involve post-CMOS process actions.

Arranging the first substrate and the second substrate with respect to each other may comprise aligning the first substrate and the second substrate with respect to each other, e.g. with a tolerance of 10 µm or less, or 5 µm or less, or 1 µm or less.

Arranging the first substrate and the second substrate with respect to each other may comprise bonding the first substrate and/or the second substrate, e.g. to a spacer element that may be located in-between.

Providing the optical waveguide may comprise defining an optical waveguide on the first substrate, and e.g. coating the optical waveguide with a transparent conductive film.

Providing the second substrate may comprise producing/providing DACs on the substrate, and coating the DACs with an insulating layer/routing layer. Providing the DC electrode set may comprise connecting the DC electrodes supported by the second substrate to the DACs, e.g. by means of (metallic) vias.

Providing the DC electrode set and/or the RF electrode set may comprise several steps of photolithography, plating and CMP, e.g. via a multilayer method.

The method may comprise: providing the other one of the optical waveguide and the microwave electrode.

The method may comprise providing a radiofrequency waveguide that may be configured to provide a radiofrequency signal to one of the RF electrodes (supported by the first substrate), and that may be supported by the first substrate. The method may comprise providing a microwave waveguide that may be configured to provide a microwave signal to the microwave electrode, and that may be supported by the first substrate.

The method may comprise providing a DC electrode that may be configured to provide a DC potential above the main surface of the first substrate, and that may be supported by the first substrate.

The method may comprise providing at least one photon detector. The at least one photon detector may be arranged to have a direct line of sight to an ion trapped in the ion trap/a position of an ion when trapped in the ion trap, e.g. respectively. The at least one photon detector may be configured to receive an optical signal of the ion when trapped in the ion trap, e.g. respectively. The at least one photon detector may be supported by the first substrate and/or by the second substrate, e.g. respectively.

The method may comprise providing integrated electronics that may be supported by the second substrate. The integrated electronics may be configured to provide a DC voltage to one of the DC electrodes supported by the second substrate. The integrated electronics may optionally comprise one or more Digital-to-analog converters, DACs.

The method may comprise providing at least one spacer element. The at least one spacer element may be configured to define a positional relationship between the first substrate and the second substrate. Optionally, the method may comprise mounting the first substrate and/or the second substrate to the at least one spacer element.

The at least one photon detector may be supported by the first substrate and/or by the second substrate and/or by the spacer element, e.g. respectively.

The method may comprise providing a hole, e.g. in the second substrate. The ion trap apparatus may be configured to couple light from the optical waveguide, being supported by the first substrate, to an ion trapped in the ion trap/a position of an ion when trapped in the ion trap, and from the ion into (when trapped in the ion trap) the hole.

The method may comprise providing a hole, e.g. in the first substrate. The ion trap apparatus may be configured to couple light from the optical waveguide, being supported by the first substrate, to an ion trapped in the ion trap/a position of an ion when trapped in the ion trap, and from the ion (when trapped in the ion trap) into the hole.

The method may comprise providing a plurality of second substrates. Each of the second substrates may support at least one DC electrode of the DC electrode set. Two of the second substrates may be provided such that there is a gap between the two of the second substrates. The ion trap apparatus may be configured to couple light from the optical waveguide, supported by the first substrate, to an ion trapped in the ion trap/a position of an ion when trapped in the ion trap, and from the ion (when trapped in the ion trap) into the gap.

The method may further comprise providing a cryostat. The ion trap may be configured to operate at cryogenic temperatures. The ion trap may be configured to operate at temperatures above 273 K.

The method may comprise providing a plurality of RF electrode sets, including the RF electrode set. The first substrate supports all RF electrodes of the plurality of RF electrode sets. Each of the plurality of RF electrode sets may be configured to provide an RF trapping potential of a respective ion trap of the plurality of ion traps, the respective RF trapping potential being above the main surface of the first substrate.

The method may comprise providing a plurality of second substrates, including the second substrate, each of the plurality of second substrates comprising a respective main surface. Each of the second substrates may be arranged such that its respective main surface is facing towards the main surface of the first substrate.

The method may comprise providing a plurality of DC electrode sets, including the DC electrode set, wherein each of the plurality second substrates supports one or more, optionally all, DC electrodes of a respective set of the plurality of DC electrode sets. Each of the plurality of DC electrode sets may be configured to provide a DC trapping potential of a respective ion trap of the plurality of ion traps, the respective DC trapping potential being above the main surface of the respective second substrate supporting one or more of the DC electrodes of the corresponding DC electrode set.

The method may comprise providing a plurality of ion traps, including the ion trap, each of the plurality of ion traps being located between the main surface of the first substrate and the main surface of one or more of the plurality of second substrates. Providing the plurality of ion traps may comprise arranging the first substrate and the plurality of second substrates with respect to each other such that their main surfaces are facing towards each other.

The method may comprise providing at least one additional optical waveguide configured to provide optical access to an ion trapped in one of the additional ion traps.

The method may comprise providing a plurality of optical waveguide. Each of the plurality of ion traps may have at least one of the plurality of optical waveguides being configured to provide optical access to an ion trapped in the respective ion trap of the plurality of ion traps.

Features disclosed with respect to the optical waveguide may also apply to the additional optical waveguide/to each of the plurality of optical waveguides, unless otherwise specified and unless contradictory.

The method may comprise providing at least one additional microwave electrode supported by the first substrate and configured to provide a microwave field configured to perform and/or to be used in a gate operation on an ion trapped in one of the additional ion traps. Optionally, the additional microwave electrode may be configured to generate a microwave magnetic near-field in the ion trap, the microwave magnetic near-field comprising a gradient.

The method may comprise providing a plurality of microwave electrodes, each of which being supported by the first substrate. Each of the plurality of ion traps may have a respective one of the plurality of microwave electrodes being configured to provide a microwave field configured to perform and/or to be used in a gate operation on an ion trapped in one of the additional ion traps.

In the present disclosure, the term "DC" refers to "direct current/voltage", unless otherwise specified or unless contradictory. In the present disclosure, the term "RF" refers to "radio frequency", unless otherwise specified or unless contradictory. In the present disclosure, the term "MW" refers to "microwave", unless otherwise specified or unless contradictory.

All technical implementation details, features and advantages described with respect to the first aspect of the present disclosure are self-evidently mutatis mutandis applicable for the second aspect of the present disclosure and vice versa.

### BRIEF DESCRIPTION OF THE DRAWINGS

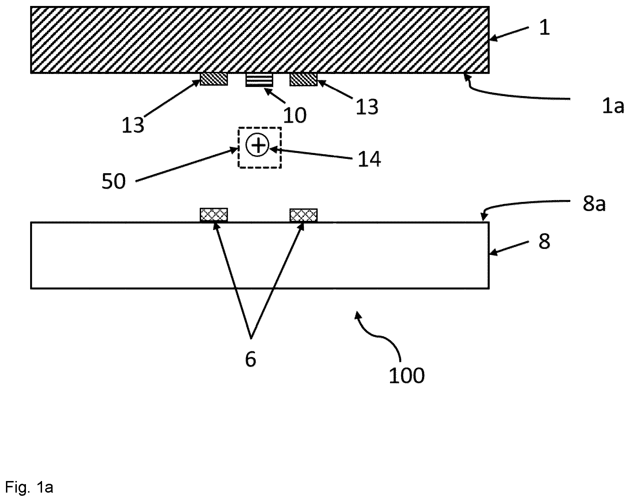

Reference will now be made to exemplary embodiments of the disclosure, examples of which are illustrated in the accompanying drawings. Wherever possible, the same reference numbers will be used throughout the drawings to refer to the same or like parts. Moreover, the features explained in context of a specific embodiment, for example that one of Fig. 1a, also apply to any one of the other embodiments, when appropriate, unless differently described.
- Figures 1a-1c: are three schematic cross-sectional views of a section of a respective ion trap apparatus according to embodiments of the present disclosure.
- Figure 2: is a schematic cross-sectional view of a section of an ion trap apparatus according to embodiments of the present disclosure.
- Figure 3: is a schematic cross-sectional view of a section of an ion trap apparatus according to embodiments of the present disclosure.
- Figure 4: is a schematic cross-sectional view of a section of an ion trap apparatus according to embodiments of the present disclosure.
- Figure 5: illustrates a method of producing an ion trap apparatus according to embodiments of the present disclosure.

### DESCRIPTION OF EMBODIMENTS

Figure 1a is a schematic cross-sectional view of a section of an ion trap apparatus 100 according to embodiments of the present disclosure.

The ion trap apparatus 100 comprises a first substrate 1 and a second substrate 8. The first substrate 1 comprises a main surface 1a. The second substrate 8 comprises a main surface 8a. The main surfaces 1a and 8a are facing towards each other. The ion trap apparatus 100 comprises an ion trap 50 (indicated by the dotted rectangle) located between the main surfaces 1a, 8a. The ion trap apparatus 100 is configured to trap an ion 14 in the ion trap 50. The ion trap apparatus 100 comprises an RF electrode set comprising RF electrodes 13. The RF electrodes 13 are supported by the first substrate 1 on its main surface 1a. The RF electrode set is configured to provide an RF trapping potential of the ion trap 50. The ion trap apparatus comprises 100 a DC electrode set comprising DC electrodes 6. The DC electrodes 6 are supported by the second substrate 8 on its main surface 8a. The DC electrode set is configured to provide a DC trapping potential of the ion trap 50. The first substrate 1 further supports an optical waveguide 10 configured to provide optical access to the ion 14.

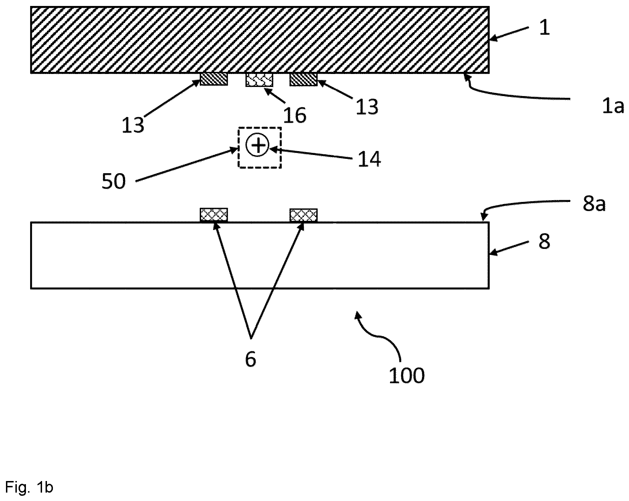

Figure 1b is a schematic cross-sectional view of a section of an ion trap apparatus 100 according to embodiments of the present disclosure.

The ion trap apparatus 100 comprises a first substrate 1 and a second substrate 8. The first substrate 1 comprises a main surface 1a. The second substrate 8 comprises a main surface 8a. The main surfaces 1a and 8a are facing towards each other. The ion trap apparatus 100 comprises an ion trap 50 (indicated by the dotted rectangle) located between the main surfaces 1a, 8a. The ion trap apparatus 100 is configured to trap an ion 14 in the ion trap 50. The ion trap apparatus 100 comprises an RF electrode set comprising RF electrodes 13. The RF electrodes 13 are supported by the first substrate 1 on its main surface 1a. The RF electrode set is configured to provide an RF trapping potential of the ion trap 50. The ion trap apparatus comprises 100 a DC electrode set comprising DC electrodes 6. The DC electrodes 6 are supported by the second substrate 8 on its main surface 8a. The DC electrode set is configured to provide a DC trapping potential of the ion trap 50. The first substrate 1 further supports a microwave electrode 16 configured to provide a microwave field configured to perform and/or to be used in a gate operation on an ion 14 trapped in the ion trap 50. Optionally, the microwave electrode may be configured to generate a microwave magnetic near-field in the ion trap 50, the microwave magnetic near-field comprising a gradient.

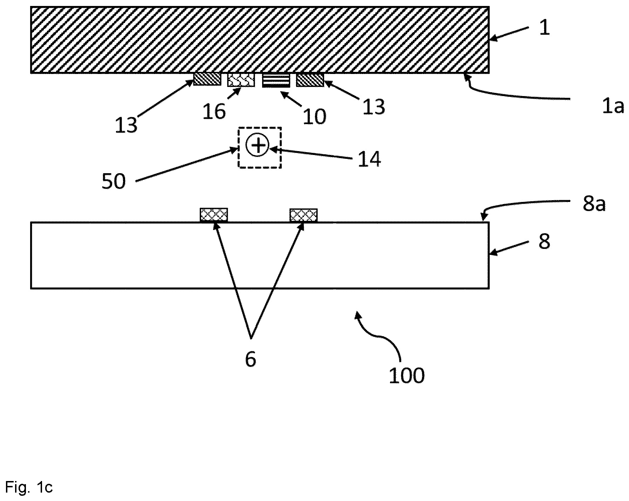

Figure 1c is a schematic cross-sectional view of a section of an ion trap apparatus 100 according to embodiments of the present disclosure.

The ion trap apparatus 100 comprises a first substrate 1 and a second substrate 8. The first substrate 1 comprises a main surface 1a. The second substrate 8 comprises a main surface 8a. The main surfaces 1a and 8a are facing towards each other. The ion trap apparatus 100 comprises an ion trap 50 (indicated by the dotted rectangle) located between the main surfaces 1a, 8a. The ion trap apparatus 100 is configured to trap an ion 14 in the ion trap 50. The ion trap apparatus 100 comprises an RF electrode set comprising RF electrodes 13. The RF electrodes 13 are supported by the first substrate 1 on its main surface 1a. The RF electrode set is configured to provide an RF trapping potential of the ion trap 50. The ion trap apparatus comprises 100 a DC electrode set comprising DC electrodes 6. The DC electrodes 6 are supported by the second substrate 8 on its main surface 8a. The DC electrode set is configured to provide a DC trapping potential of the ion trap 50. The first substrate 1 further supports an optical waveguide 10 configured to provide optical access to the ion 14. The first substrate 1 further supports a microwave electrode 16 configured to provide a microwave field configured to perform and/or to be used in a gate operation on an ion 14 trapped in the ion trap 50. Optionally, the microwave electrode may be configured to generate a microwave magnetic near-field in the ion trap 50, the microwave magnetic near-field comprising a gradient.

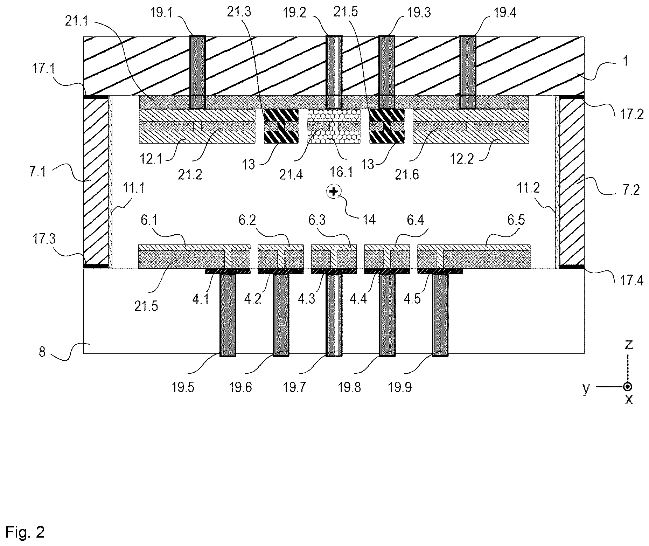

Figure 2 is a schematic cross-sectional view of a section of an ion trap apparatus according to embodiments of the present disclosure.

The first substrate 1 supports RF electrodes 13 of the RF electrode set. The RF electrodes 13 are multilayer electrodes, each comprising a dielectric layer 21.3, 21.5 in between their electrode layers. The RF electrode set is configured to provide an RF trapping potential of the ion trap.

The first substrate 1 supports the microwave electrode 16.1. The microwave electrode 16.1 is a multilayer electrode, comprising a dielectric layer 21.4 in between their electrode layers. The microwave electrode 16.1 is configured to provide a microwave field configured to perform a gate operation on an ion 14 trapped in the ion trap.

The first substrate 1 supports DC electrodes 12.1 and 12.2. The DC electrodes 12.1 and 12.2 are multilayer electrodes, each comprising a respective dielectric layer 21.2, 21.6 in between their electrode layers. The DC electrodes 12.1 and 12.2 may be configured to provide/contribute to the DC trapping potential. The DC electrodes 12.1 and 12.2 may also be configured to act as shim electrodes/may be shim electrodes, that compensate and/or shim stray electric fields. The DC electrodes 12.1 and 12.2 may be used for shimming and/or for compensating for stray electric fields.

An insulating layer/routing layer 21.1 is located between the RF electrodes 13, the DC electrodes 12.1, 12.2, and the microwave electrode 16.1 on the one side, and the first substrate 1 on the other side. The insulating layer/routing layer 21.1 is a routing layer for routing respective signals to the respective electrodes. The RF electrodes 13 are connected to each other (on top of the first substrate 1/the insulating layer/routing layer 21.1, the connection of the RF electrodes 13 with each other is not shown in Fig. 2 for reasons of clarity). The RF electrodes 13 are connected to radiofrequency waveguide 19.3 that is configured to provide a radiofrequency signal to the RF electrodes 13. The radiofrequency waveguide 19.3 contacts through the insulating layer/routing layer 21.1 and through the first substrate 1. The DC electrodes 12.1, 12.2 are respectively connected to through substrate vias 19.1, 19.4 that contact through the insulating layer/routing layer 21.1 and through the first substrate 1. The microwave electrode 16.1 is connected to microwave waveguide 19.2 that contacts through the insulating layer/routing layer 21.1 and through the first substrate 1. The microwave waveguide 19.2 is configured to provide a microwave signal to the microwave electrode 16.1.

The second substrate 8 supports DC electrodes 6.1, 6.2, 6.3, 6.4, 6.5 (in the following abbreviated as 6.1-6.5) of the DC electrode set. The DC electrodes 6.1-6.5 are single-layer electrodes. The DC electrode set is configured to provide a DC trapping potential of the ion trap. The DC electrodes 6.1-6.5 are connected to DACs 4.1-4.5 by means of vias. The DACs 4.1-4.5 are configured to provide respective DC voltages to each of DC electrodes 6.1-6.5. The DACs 4.1-4.5 are connected to respective through-substrate-vias 19.5-19.9 that extend through the second substrate 8. The DACs 4.1-4.5 are embedded into the second substrate 8. Insulating layers/routing layers (indicated by reference number 21.5, not all insulating layers/routing layers are indicated by dedicated reference numbers in order to enhance clarity) are located between the DC electrodes 6.1-6.5 and the second substrate 8/the DACs 4.1-4.5.

The ion trap apparatus further comprises spacer elements 7.1 and 7.2, that are configured to define a positional relationship between the first substrate 1 and the second substrate 8. Spacer elements 7.1 and 7.2 are coated by (transparent) conductive films 11.1 and 11.2, respectively. Conductive films 11.1, 11.2 allow to avoid built-up of parasitic charges and to avoid uncontrolled e-fields from built-up charges on the respective surfaces of the spacer elements 7.1 and 7.2.

The spacer elements 7.1 and 7.2 are connected to the first substrate 1 by means of joints 17.1, 17.2, and to the second substrate 8 by means of joints 17.3, 17.4.

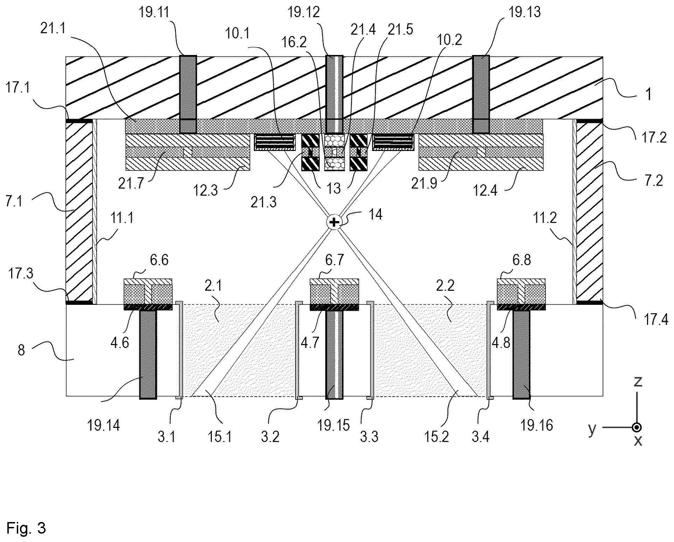

Figure 3 is a schematic cross-sectional view of a section of an ion trap apparatus according to embodiments of the present disclosure.

The first substrate 1 supports RF electrodes 13 of the RF electrode set. The RF electrodes 13 are multilayer electrodes, each comprising a dielectric layer 21.3, 21.5 in between their electrode layers. The RF electrode set is configured to provide an RF trapping potential of the ion trap.

The first substrate 1 supports the microwave electrode 16.2. The microwave electrode 16.2 is a multilayer electrode, comprising a dielectric layer 21.4 in between their electrode layers. The microwave electrode 16.2 is configured to provide a microwave field configured to perform a gate operation on an ion 14 trapped in the ion trap.

The first substrate 1 supports optical waveguides 10.1 and 10.2 that are configured to provide optical access to the ion 14 trapped in the ion trap. The optical waveguides 10.1, 10.2 irradiate a respective optical signal onto the ion 14. The optical waveguides 10.1, 10.2 comprise a transparent conductive coating (no dedicated reference number, but visible in Fig. 3) to avoid built-up of parasitic charges, i.e. to avoid uncontrolled e-fields from built-up charges on dielectric surfaces. Input couplers of the optical waveguides 10.1, 10.2 that provide the respective optical signal to the optical waveguides 10.1, 10.2 are not shown in Fig. 3 for reasons of clarity, and may be located at edge positions of the first substrate 1, e.g. supported on the main surface of the first substrate 1.

The first substrate 1 supports DC electrodes 12.3 and 12.4. The DC electrodes 12.3 and 12.4 are multilayer electrodes, each comprising a respective dielectric layer 21.7, 21.9 in between their electrode layers. The DC electrodes 12.3 and 12.4 may be configured to provide/contribute to the DC trapping potential. The DC electrodes 12.3 and 12.4 may also be configured to act as shim electrodes/may be shim electrodes, that compensate and/or shim stray electric fields. The DC electrodes 12.3 and 12.4 may be used for shimming and/or for compensating for stray electric fields.

An insulating layer/routing layer 21.1 is located between the RF electrodes 13, the microwave electrode 16.2, the DC electrodes 12.3, 12.4, and the optical waveguides 10.1, 10.2 on the one side, and the first substrate 1 on the other side. The insulating layer/routing layer 21.1 is a routing layer for routing respective signals to the respective electrodes. The RF electrodes 13 are connected to each other (on top of the first substrate 1/the insulating layer/routing layer 21.1, the connection of the RF electrodes 13 with each other is not shown in Fig. 3 for reasons of clarity). The RF electrodes 13 are connected to a radiofrequency waveguide that is configured to provide a radiofrequency signal to the RF electrodes 13. The radiofrequency waveguide contacts through the insulating layer/routing layer 21.1 and through the first substrate 1 (the radiofrequency waveguide is not shown explicitly in Fig. 3 for reasons of clarity). The DC electrodes 12.3, 12.4 are respectively connected to through substrate vias 19.11, 19.13 that contact through the insulating layer/routing layer 21.1 and through the first substrate 1. The microwave electrode 16.2 is connected to microwave waveguide 19.12 that contacts through the insulating layer/routing layer 21.1 and through the first substrate 1. The microwave waveguide 19.12 is configured to provide a microwave signal to the microwave electrode 16.2.

The second substrate 8 supports DC electrodes 6.6, 6.7, 6.8 (in the following abbreviated as 6.6-6.8) of the DC electrode set. The DC electrodes 6.6-6.8 are single-layer electrodes. The DC electrode set is configured to provide a DC trapping potential of the ion trap. The DC electrodes 6.6-6.8 are connected to respective DACs 4.6-4.8 by means of vias. The DACs 4.6-4.8 are configured to provide respective DC voltages to each of DC electrodes 6.6-6.8. The DACs 4.6-4.8 are connected to respective through-substrate-vias 19.14-19.16 that extend through the second substrate 8. The DACs 4.6-4.8 are embedded into the second substrate 8. Insulating layers/routing layers (no reference sign in Fig. 3) are located between the DC electrodes 6.6-6.8 and the second substrate 8/the DACs 4.6-4.8.

The second substrate 8 comprises holes 2.1, 2.2. The ion trap apparatus is configured to couple the optical signals 15.1, 15.2, that are respectively irradiated by the optical waveguides 10.1, 10.2 onto the ion 14, through the holes 2.1, 2.2. The holes 2.1, 2.2 may serve as a beam dump and/or for detection. The sidewalls of holes 2.1, 2.2 have respective conductive coatings 3.1-3.4 in order to avoid built-up of parasitic charges and to avoid uncontrolled e-fields from built-up charges on the sidewall surfaces of the holes 2.1, 2.2.

The ion trap apparatus further comprises spacer elements 7.1 and 7.2, that are configured to define a positional relationship between the first substrate 1 and the second substrate 8. Spacer elements 7.1 and 7.2 are coated by (transparent) conductive films 11.1 and 11.2, respectively. Conductive films 11.1, 11.2 allow to avoid built-up of parasitic charges and to avoid uncontrolled e-fields from built-up charges on the respective surfaces of the spacer elements 7.1 and 7.2.

The spacer elements 7.1 and 7.2 are connected to the first substrate 1 by means of joints 17.1, 17.2, and to the second substrate 8 by means of joints 17.3, 17.4.

The ion trap apparatus shown in Fig. 3 may comprise a manipulation region/a manipulation ion trap. E.g., by means of the microwave electrode 16.2, gate operations may be performed on single ions 14 trapped in the ion trap, and/or on multiple (e.g., two) ions simultaneously trapped in the ion trap.

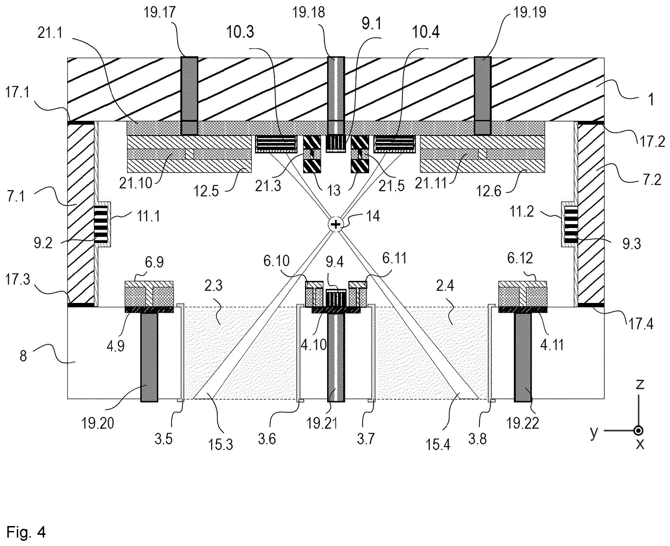

Figure 4 is a schematic cross-sectional view of a section of an ion trap apparatus according to embodiments of the present disclosure.

The first substrate 1 supports RF electrodes 13 of the RF electrode set. The RF electrodes 13 are multilayer electrodes, each comprising a dielectric layer 21.3, 21.5 in between their electrode layers. The RF electrode set is configured to provide an RF trapping potential of the ion trap.

The first substrate 1 may support an optional microwave electrode. The microwave electrode is configured to provide a microwave field configured to perform a gate operation on an ion 14 trapped in the ion trap. The microwave electrode is not shown in Fig. 4 for reasons of clarity.

The first substrate 1 supports optical waveguides 10.3 and 10.4 that are configured to provide optical access to the ion 14 trapped in the ion trap. The optical waveguides 10.3, 10.4 irradiate a respective optical signal onto the ion 14. The optical waveguides 10.3, 10.4 comprises a transparent conductive coating (no dedicated reference number, but visible in Fig. 4) to avoid built-up of parasitic charges, i.e. to avoid uncontrolled e-fields from built-up charges on dielectric surfaces. Input couplers of the optical waveguides 10.3, 10.4 that provide the respective optical signal to the optical waveguides 10.3, 10.4 are not shown in Fig. 4 for reasons of clarity, and may be located at edge positions of the first substrate 1, e.g. supported on the main surface of the first substrate 1.

The first substrate 1 supports single photon detector 9.1, which has a direct line of sight to the trapped ion 14/a position of the ion when trapped in the ion trap 50. Single photon detector 9.1 is configured to receive an optical signal of the trapped ion 14/of the ion when trapped in the ion trap 50. Single photon detector 9.1 comprises a transparent conductive coating (no dedicated reference number, but visible in Fig. 4) to avoid built-up of parasitic charges, i.e. to avoid uncontrolled e-fields from built-up charges on dielectric surfaces. Single photon detector 9.1 is connected to through substrate via 19.18 that contacts through the insulating layer/routing layer 21.1 and through the first substrate 1.

The first substrate 1 supports DC electrodes 12.5 and 12.6. The DC electrodes 12.5 and 12.6 are multilayer electrodes, each comprising a respective dielectric layer 21.10, 21.11 in between their electrode layers. The DC electrodes 12.5 and 12.6 may be configured to provide/contribute to the DC trapping potential. The DC electrodes 12.5 and 12.6 may also be configured to act as shim electrodes/may be shim electrodes, that compensate and/or shim stray electric fields. The DC electrodes 12.5 and 12.6 may be used for shimming and/or for compensating for stray electric fields.

An insulating layer/routing layer 21.1 is located between the RF electrodes 13, the optional microwave electrode, the single photon detector 9.1, the DC electrodes 12.5, 12.6, and the optical waveguides 10.3, 10.4 on the one side, and the first substrate 1 on the other side. The insulating layer/routing layer 21.1 is a routing layer for routing respective signals to the respective electrodes. The RF electrodes 13 are connected to each other (on top of the first substrate 1/the insulating layer/routing layer 21.1, the connection of the RF electrodes 13 with each other is not shown in Fig. 4 for reasons of clarity). The RF electrodes 13 are connected to a radiofrequency waveguide that is configured to provide a radiofrequency signal to the RF electrodes 13. The radiofrequency waveguide contacts through the insulating layer/routing layer 21.1 and through the first substrate 1 (the radiofrequency waveguide is not shown explicitly in Fig. 4 for reasons of clarity). The DC electrodes 12.5, 12.6 are respectively connected to through substrate vias 19.17, 19.19 that contact through the insulating layer/routing layer 21.1 and through the first substrate 1.

The second substrate 8 supports DC electrodes 6.9, 6.10, 6.11, 6.12 (in the following abbreviated as 6.9-6.12) of the DC electrode set. The DC electrodes 6.9-6.12 are single-layer electrodes. The DC electrode set is configured to provide a DC trapping potential of the ion trap. The DC electrodes 6.9-6.12 are connected to respective DACs 4.9-4.11 by means of vias. The DACs 4.9-4.11 are configured to provide respective DC voltages to each of DC electrodes 6.9-6.12. The DACs 4.9-4.11 are connected to respective through-substrate-vias 19.20-19.22 that extend through the second substrate 8. The DACs 4.9-4.11 are embedded into the second substrate 8. Insulating layers/routing layers (no reference sign in Fig. 4) are located between the DC electrodes 6.9-6.12 and the second substrate 8/the DACs 4.9-4.11.

The second substrate 8 also supports single photon detector 9.4, which has a direct line of sight to the trapped ion 14/a position of the ion when trapped in the ion trap 50. Single photon detector 9.4 is configured to receive an optical signal of the trapped ion 14/of the ion when trapped in the ion trap 50. Single photon detector 9.4 comprises a transparent conductive coating (no dedicated reference number, but visible in Fig. 4) to avoid built-up of parasitic charges, i.e. to avoid uncontrolled e-fields from built-up charges on dielectric surfaces. The single photon detector 9.4 is connected to a through substrate via that contacts through the insulating layer/routing layer 21.1 and through the first substrate 1 (not shown in Fig. 4 for reasons of clarity).

The second substrate 8 comprises holes 2.3, 2.4. The ion trap apparatus is configured to couple the optical signals 15.3, 15.4, that are respectively irradiated by the optical waveguides 10.3, 10.4 onto the ion 14, through the holes 2.3, 2.4. The holes 2.3, 2.4 may serve as a beam dump and/or for detection. The sidewalls of holes 2.3, 2.4 have respective conductive coatings 3.5-3.8 in order to avoid built-up of parasitic charges and to avoid uncontrolled e-fields from built-up charges on the sidewall surfaces of the holes 2.3, 2.4.

The ion trap apparatus further comprises spacer elements 7.1 and 7.2, that are configured to define a positional relationship between the first substrate 1 and the second substrate 8. Spacer elements 7.1 and 7.2 are coated by transparent conductive films 11.1 and 11.2, respectively. Conductive films 11.1, 11.2 allow to avoid built-up of parasitic charges and to avoid uncontrolled e-fields from built-up charges on the respective surfaces of the spacer elements 7.1 and 7.2.

The spacer elements 7.1 and 7.2 support single photon detectors 9.2 and 9.3, respectively. Single photon detectors 9.2 and 9.3 respectively have a direct line of sight to the trapped ion 14/a position of the ion when trapped in the ion trap 50, and are configured to receive an optical signal of the trapped ion 14/of the ion when trapped in the ion trap 50.

The spacer elements 7.1 and 7.2 are connected to the first substrate 1 by means of joints 17.1, 17.2, and to the second substrate 8 by means of joints 17.3, 17.4.

The ion trap apparatus shown in Fig. 4 may comprise a detection region/a detection ion trap. E.g., by means of the single photon detectors 9.1-9.4, an optical signal of the trapped ion 14 may be detected, which may allow to determine an internal state of the trapped ion 14.

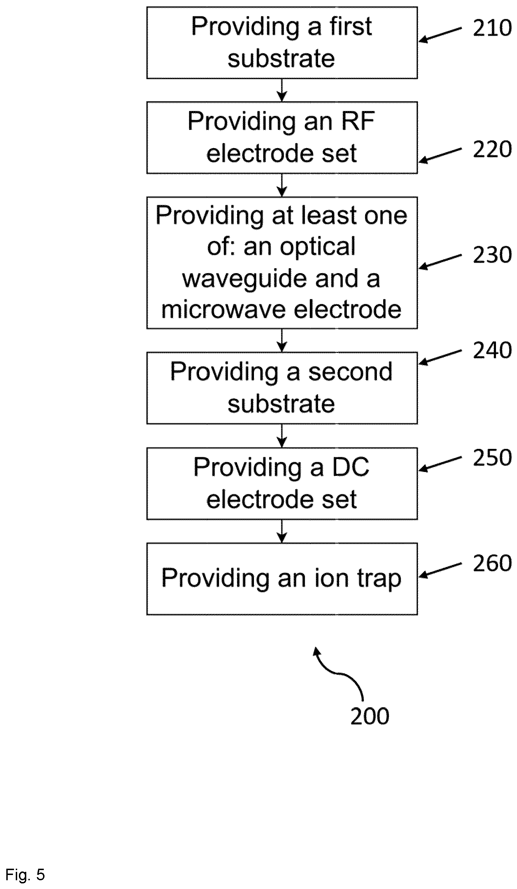

Figure 5 illustrates a method 200 of producing an ion trap apparatus according to embodiments of the present disclosure. In action 210, a first substrate having a main surface is provided. In action 220, an RF electrode set is provided. All RF electrodes of the RF electrode set are supported by the first substrate. The RF electrode set is configured to provide an RF trapping potential of an ion trap, the RF trapping potential being above the main surface of the first substrate. In action 230, at least one of an optical waveguide and a microwave electrode is provided. The optical waveguide and/or the microwave electrode is supported by the first substrate. In action 240, a second substrate having a main surface is provided. In action 250, a DC electrode set is provided. One or more, optionally all, DC electrodes of the DC electrode set are supported by the second substrate. The DC electrode set is configured to provide a DC trapping potential of the ion trap, the DC trapping potential being above the main surface of the second substrate. In action 260, the ion trap is provided between the main surface of the first substrate and the main surface of the second substrate. Providing the ion trap comprises arranging the first substrate and the second substrate with respect to each other such that the main surfaces are facing towards each other. The optical waveguide is configured to provide optical access to an ion trapped in the ion trap. The microwave electrode is configured to provide a microwave field configured to perform a gate operation on an ion trapped in the ion trap, wherein optionally, the microwave electrode is configured to generate a microwave magnetic near-field in the ion trap, the microwave magnetic near-field comprising a gradient.

Although some aspects have been described in the context of an apparatus, it is clear that these aspects also represent a description of the corresponding method, where a block or component corresponds to a method action or a feature of a method action. Analogously, aspects described in the context of a method action also represent a description of a corresponding component or item or feature of a corresponding apparatus.

### LIST OF REFERENCE SIGNS

- 1: first substrate
- 1a: main surface of first substrate
- 2: hole
- 3: conductive coating on sidewall of hole
- 4: DAC
- 6: DC electrode supported on second substrate
- 7: spacer element
- 8: second substrate
- 8a: main surface of second substrate
- 9: single photon detector
- 10: optical waveguide comprising output coupler
- 11: transparent conductive film (coating)
- 12: DC electrode supported on first substrate
- 13: RF electrode supported on first substrate
- 14: trapped ion(s)
- 15: optical signal from optical waveguide
- 16: microwave electrode supported on first substrate
- 17: joint
- 19: Through Substrate Via (TSV) and/or RF/microwave waveguide
- 21: dielectric layer, insulating layer/routing layer
- 50: ion trap
- 100: ion trap apparatus
- 200: method of producing an ion trap apparatus
- 210-260: actions of method

## Claims

1. An ion trap apparatus (100), comprising:
a first substrate (1) and a second substrate (8), each comprising a respective main surface (1a, 8a), wherein the first substrate (1) and the second substrate (8) are arranged such that the main surfaces (1a, 8a) are facing towards each other,
an ion trap (50) located between the main surface of the first substrate (1a) and the main surface of the second substrate (8a),
an RF electrode set, wherein the first substrate (1) supports all RF electrodes (13) of the RF electrode set,
wherein the RF electrode set is configured to provide the RF trapping potential of the ion trap (50), the RF trapping potential being above the main surface of the first substrate (1a),
a DC electrode set, wherein the second substrate (8) supports one or more, optionally all, DC electrodes (6) of the DC electrode set,
wherein the DC electrode set is configured to provide a DC trapping potential of the ion trap (50), the DC trapping potential being above the main surface of the second substrate (8a),
wherein the first substrate (1) further supports at least one of:
an optical waveguide (10) configured to provide optical access to an ion (14) trapped in the ion trap (50), and
a microwave electrode (16) configured to provide a microwave field configured to perform a gate operation on an ion (14) trapped in the ion trap (50), wherein optionally, the microwave electrode (16) is configured to generate a microwave magnetic near-field in the ion trap (50), the microwave magnetic near-field comprising a gradient.

2. The ion trap apparatus (100) according to claim 1, wherein the first substrate (1) further supports the other one of: the optical waveguide (10), and the microwave electrode (16).

3. The ion trap apparatus (100) according to claim 1 or claim 2,
wherein the first substrate (1) supports a radiofrequency waveguide configured to provide a radiofrequency signal to one of the RF electrodes, and/or
wherein the first substrate (1) supports a microwave waveguide configured to provide a microwave signal to the microwave electrode.

4. The ion trap apparatus (100) according to any one of claims 1 to 3,
wherein the first substrate (1) further supports a DC electrode (12), configured to provide a DC potential above the main surface of the first substrate (1a).

5. The ion trap apparatus (100) according to any one of claims 1 to 4,
wherein the ion trap apparatus (100) further comprises at least one photon detector being arranged to have a direct line of sight to a position of an ion (14) when trapped in the ion trap (50) and being configured to receive an optical signal of the ion (14) when trapped in the ion trap (50),
wherein the at least one photon detector is supported by the first substrate (1) and/or by the second substrate (8).

6. The ion trap apparatus (100) according to any one of claims 1 to 5,
wherein the second substrate (8) further supports integrated electronics configured to provide a DC voltage to one of the DC electrodes (6) supported by the second substrate (8),
wherein the integrated electronics optionally comprises one or more Digital-to-analog converters, DACs (4).

7. The ion trap apparatus (100) according to any one of claims 1 to 6,
wherein a loss tangent of the first substrate (1) is lower as compared to a loss tangent of the second substrate (8),
wherein optionally the first substrate (1) comprises a dielectric material, wherein the dielectric material optionally comprises at least one of the following materials: AIN, Al₂O₃, BeO, diamond, SiN and SiO₂, and/or
wherein optionally, the second substrate (8) comprises a semiconductor material, wherein the semiconductor material optionally comprises at least one of the following materials: silicon, SiC, GaN, graphene.

8. The ion trap apparatus (100) according to any one of claims 1 to 7,
wherein the RF electrodes and/or the DC electrodes and/or the microwave electrode are multilayer electrodes provided on the first/second substrate,
wherein one or more of the multilayer electrodes comprise at least one dielectric layer in between electrode layers of the respective multilayer electrode.

9. The ion trap apparatus (100) according to any one of claims 1 to 8,
wherein the ion trap apparatus (100) further comprises at least one spacer element (7), wherein the at least one spacer element (7) is configured to define a positional relationship between the first substrate (1) and the second substrate (8),
wherein optionally, the first substrate (1) and/or the second substrate (8) is mounted to the at least one spacer element (7).

10. The ion trap apparatus (100) according to claim 9, wherein the at least one spacer element (7) supports a photon detector being arranged to have a direct line of sight to a position of an ion (14) when trapped in the ion trap (50) and being configured to receive an optical signal of the ion (14) when trapped in the ion trap (50).

11. The ion trap apparatus (100) according to any one of claims 1 to 10,
wherein the second substrate (8) comprises a hole (2) and wherein the ion trap apparatus (100) is configured to couple light from the optical waveguide (10), being supported by the first substrate (1), to a position of an ion (14) when trapped in the ion trap (50), and from the ion into (14) the hole (2), and/or
wherein the first substrate (1) comprises a hole and wherein the ion trap apparatus (100) is configured to couple light from the optical waveguide (10), being supported by the first substrate (1), to a position of an ion (14) when trapped in the ion trap (50), and from the ion (14) into the hole.

12. The ion trap apparatus (100) according to any one of claims 1 to 11,
wherein the ion trap apparatus (100) comprises a plurality of second substrates, including the second substrate (8), each of the second substrates supporting at least one DC electrode of the DC electrode set,
wherein the ion trap apparatus (100) comprises a gap between two of the second substrates,
wherein the ion trap apparatus (100) is configured to couple light from the optical waveguide (10), supported by the first substrate (1), to a position of an ion (14) when trapped in the ion trap (50), and from the ion (14) into the gap.

13. The ion trap apparatus (100) according to any one of claims 1 to 12,
wherein the ion trap apparatus (100) further comprises a cryostat and wherein the ion trap (50) is configured to operate at cryogenic temperatures, and/or
wherein the ion trap (50) is configured to operate at temperatures above 273 K.

14. The ion trap apparatus (100) according to any one of claims 1 to 13, comprising:
a plurality of second substrates, including the second substrate (8), each of the plurality of second substrates comprising a respective main surface, wherein each of the second substrates is arranged such that its respective main surface is facing towards the main surface of the first substrate (1a),
a plurality of ion traps, including the ion trap (50), each of the plurality of ion traps being located between the main surface of the first substrate (1a) and the main surface of one or more of the plurality of second substrates,
a plurality of RF electrode sets, including the RF electrode set, wherein the first substrate (1) supports all RF electrodes of the plurality of RF electrode sets,
wherein each of the plurality of RF electrode sets is configured to provide the RF trapping potential of a respective ion trap of the plurality of ion traps, the respective RF trapping potential being above the main surface of the first substrate (1a),
a plurality of DC electrode sets, including the DC electrode set, wherein each of the plurality of second substrates supports one or more, optionally all, DC electrodes of a respective set of the plurality of DC electrode sets,
wherein each of the plurality of DC electrode sets is configured to provide a DC trapping potential of a respective ion trap of the plurality of ion traps, the respective DC trapping potential being above the main surface of the respective second substrate supporting one or more of the DC electrodes of the corresponding DC electrode set.

15. A method (200) of producing an ion trap apparatus, comprising:
providing (210) a first substrate comprising a main surface,
providing (220) an RF electrode set, wherein all RF electrodes of the RF electrode set are supported by the first substrate,
wherein the RF electrode set is configured to provide an RF trapping potential of an ion trap, the RF trapping potential being above the main surface of the first substrate,
providing (230) at least one of: an optical waveguide and a microwave electrode,
wherein the optical waveguide and/or the microwave electrode is supported by the first substrate,
providing (240) a second substrate comprising a main surface,
providing (250) a DC electrode set, wherein one or more, optionally all, DC electrodes of the DC electrode set are supported by the second substrate,
wherein the DC electrode set is configured to provide a DC trapping potential of the ion trap, the DC trapping potential being above the main surface of the second substrate,
providing (260) the ion trap between the main surface of the first substrate and the main surface of the second substrate,
wherein providing the ion trap comprises arranging the first substrate and the second substrate with respect to each other such that the main surfaces are facing towards each other,
wherein the optical waveguide is configured to provide optical access to an ion trapped in the ion trap,
wherein the microwave electrode is configured to provide a microwave field configured to perform a gate operation on an ion trapped in the ion trap, wherein optionally, the microwave electrode is configured to generate a microwave magnetic near-field in the ion trap, the microwave magnetic near-field comprising a gradient.

## Patentansprüche

1. lonenfallenapparat (100), umfassend:
ein erstes Substrat (1) und ein zweites Substrat (8), die jeweils eine Hauptoberfläche (1a, 8a) umfassen, wobei das erste Substrat (1) und das zweite Substrat (8) so angeordnet sind, dass die Hauptoberflächen (1a, 8a) einander zugewandt sind,
eine Ionenfalle (50), die zwischen der Hauptoberfläche des ersten Substrats (1a) und der Hauptoberfläche des zweiten Substrats (8a) lokalisiert ist,
einen RF-Elektrodensatz, wobei das erste Substrat (1) alle RF-Elektroden (13) des RF-Elektrodensatzes trägt,
wobei der RF-Elektrodensatz dazu konfiguriert ist, das RF-Fallenpotential der Ionenfalle (50) bereitzustellen, wobei das RF-Fallenpotential über der Hauptoberfläche des ersten Substrats (1a) ist,
einen DC-Elektrodensatz, wobei das zweite Substrat (8) eine oder mehrere, optional alle, DC-Elektroden (6) des DC-Elektrodensatzes trägt,
wobei der DC-Elektrodensatz dazu konfiguriert ist, ein DC-Fallenpotential der lonenfallen (50) bereitzustellen, wobei das DC-Fallenpotential über der Hauptoberfläche des zweiten Substrats (8a) ist,
wobei das erste Substrat (1) ferner mindestens eines der folgenden trägt:
einen optischen Waveguide (10), der dazu konfiguriert ist, einen optischen Zugang zu einem Ion (14) bereitzustellen, das in der Ionenfalle (50) gefangenen ist, und
eine Mikrowellenelektrode (16), die dazu konfiguriert ist, ein Mikrowellenfeld bereitzustellen, das dazu konfiguriert ist, eine Gatter-Operation an einem Ion (14) durchzuführen, das in der Ionenfalle (50) gefangen ist, wobei die Mikrowellenelektrode (16) optional dazu konfiguriert ist, ein magnetisches Mikrowellen-Nahfeld in der Ionenfalle (50) zu erzeugen, wobei das magnetische Mikrowellen-Nahfeld einen Gradienten umfasst.

2. lonenfallenapparat (100) gemäß Anspruch 1, wobei das erste Substrat (1) ferner das andere von dem optischen Waveguide (10) und der Mikrowellenelektrode (16) trägt.

3. lonenfallenapparat (100) gemäß Anspruch 1 oder Anspruch 2,
wobei das erste Substrat (1) einen Radiofrequenzwaveguide trägt, der dazu konfiguriert ist, ein Radiofrequenzsignal einer der RF-Elektroden bereitzustellen, und/oder
wobei das erste Substrat (1) einen Mikrowellenwaveguide trägt, der dazu konfiguriert ist, ein Mikrowellensignal der Mikrowellenelektrode bereitzustellen.

4. lonenfallenapparat (100) gemäß einem der Ansprüche 1 bis 3,
wobei das erste Substrat (1) ferner eine DC-Elektrode (12) trägt, die dazu konfiguriert ist, ein DC-Potential über der Hauptoberfläche des ersten Substrats (1a) bereitzustellen.

5. lonenfallenapparat (100) gemäß einem der Ansprüche 1 bis 4,
wobei der lonenfallenapparat (100) ferner mindestens einen Photonendetektor umfasst, der so angeordnet ist, dass er eine direkte Sichtlinie zu einer Position eines Ions (14) hat, wenn es in der Ionenfalle (50) gefangen ist, und der dazu konfiguriert ist, ein optisches Signal des Ions (14) zu empfangen, wenn es in der Ionenfalle (50) gefangen ist,
wobei der mindestens eine Photonendetektor vom ersten Substrat (1) und/oder vom zweiten Substrat (8) getragen wird.

6. lonenfallenapparat (100) gemäß einem der Ansprüche 1 bis 5,
wobei das zweite Substrat (8) ferner integrierte Elektronik trägt, die dazu konfiguriert ist, eine DC-Spannung einer der DC-Elektroden (6) bereitzustellen, die von dem zweiten Substrat (8) getragen wird,
wobei die integrierte Elektronik optional einen oder mehrere Digital-Analog-Wandler, DACs (4), umfasst.

7. lonenfallenapparat (100) gemäß einem der Ansprüche 1 bis 6,
wobei eine Verlusttangente des ersten Substrats (1) geringer ist als eine Verlusttangente des zweiten Substrats (8),
wobei optional das erste Substrat (1) ein dielektrisches Material umfasst, wobei das dielektrische Material optional mindestens eines der folgenden Materialien umfasst: AIN, Al₂O₃, BeO, Diamant, SiN und SiO₂, und/oder
wobei optional das zweite Substrat (8) ein Halbleitermaterial umfasst, wobei das Halbleitermaterial optional mindestens eines der folgenden Materialien umfasst: Silizium, SiC, GaN, Graphen.

8. lonenfallenapparat (100) gemäß einem der Ansprüche 1 bis 7,
wobei die RF-Elektroden und/oder die DC-Elektroden und/oder die Mikrowellenelektrode Multilayerelektroden sind, die auf dem ersten/zweiten Substrat bereitgestellt sind,
wobei eine oder mehrere der Multilayerelektroden mindestens eine dielektrische Schicht zwischen Elektrodenlayern der jeweiligen Multilayerelektrode umfassen.

9. lonenfallenapparat (100) gemäß einem der Ansprüche 1 bis 8,
wobei der lonenfallenapparat (100) ferner mindestens ein Spacerelement (7) umfasst, wobei das mindestens eine Spacerelement (7) dazu konfiguriert ist, eine Positionsbeziehung zwischen dem ersten Substrat (1) und dem zweiten Substrat (8) zu definieren,
wobei optional das erste Substrat (1) und/oder das zweite Substrat (8) an dem mindestens einen Spacerelement (7) montiert ist.

10. lonenfallenapparat (100) gemäß Anspruch 9, wobei das mindestens eine Spacerelement (7) einen Photonendetektor trägt, der so angeordnet ist, dass er eine direkte Sichtlinie zu einer Position eines Ions (14) hat, wenn es in der Ionenfalle (50) gefangen ist, und der dazu konfiguriert ist, ein optisches Signal des Ions (14) zu empfangen, wenn es in der Ionenfalle (50) gefangen ist.

11. lonenfallenapparat (100) gemäß einem der Ansprüche 1 bis 10,
wobei das zweite Substrat (8) ein Loch (2) umfasst und wobei der lonenfallenapparat (100) dazu konfiguriert ist, Licht von dem optischen Waveguide (10), der vom ersten Substrat (1) getragen wird, an eine Position eines Ions (14) zu koppeln, wenn es in der Ionenfalle (50) gefangen ist, und vom Ion (14) in das Loch (2), und/oder
wobei das erste Substrat (1) ein Loch umfasst und wobei der lonenfallenapparat (100) dazu konfiguriert ist, Licht von dem optischen Waveguide (10), der vom ersten Substrat (1) getragen wird, an eine Position eines Ions (14) zu koppeln, wenn es in der Ionenfalle (50) gefangen ist, und vom Ion (14) in das Loch.

12. lonenfallenapparat (100) gemäß einem der Ansprüche 1 bis 11,
wobei der lonenfallenapparat (100) eine Mehrzahl von zweiten Substraten umfasst, die das zweite Substrat (8) enthält, wobei jedes der zweiten Substrate mindestens eine DC-Elektrode des DC-Elektrodensatzes trägt,
wobei der lonenfallenapparat (100) eine Lücke zwischen zwei der zweiten Substrate umfasst,
wobei der lonenfallenapparat (100) dazu konfiguriert ist, Licht von dem optischen Waveguide (10), der vom ersten Substrat (1) getragen wird, an eine Position eines Ions (14) zu koppeln, wenn es in der Ionenfalle (50) gefangen ist, und vom Ion (14) in die Lücke.

13. lonenfallenapparat (100) gemäß einem der Ansprüche 1 bis 12,
wobei der lonenfallenapparat (100) ferner einen Kryostaten umfasst und wobei die Ionenfalle (50) dazu konfiguriert ist, bei kryogenen Temperaturen zu arbeiten, und/oder
wobei die Ionenfalle (50) dazu konfiguriert ist, bei Temperaturen über 273 K zu arbeiten.

14. lonenfallenapparat (100) gemäß einem der Ansprüche 1 bis 13, umfassend:
eine Mehrzahl von zweiten Substraten, die das zweite Substrat (8) enthält, wobei jedes der Mehrzahl von zweiten Substraten eine jeweilige Hauptoberfläche umfasst, wobei jedes der zweiten Substrate so angeordnet ist, dass seine jeweilige Hauptoberfläche der Hauptoberfläche des ersten Substrats (1a) zugewandt ist,
eine Mehrzahl von lonenfallen, die die Ionenfalle (50) enthält, wobei jede der Mehrzahl von lonenfallen zwischen der Hauptoberfläche des ersten Substrats (1a) und der Hauptoberfläche eines oder mehrerer der Mehrzahl von zweiten Substraten lokalisiert ist,
eine Mehrzahl von RF-Elektrodensätzen, die den RF-Elektrodensatz enthält, wobei das erste Substrat (1) alle RF-Elektroden der Mehrzahl von RF-Elektrodensätzen trägt,
wobei jeder der Mehrzahl von RF-Elektrodensätzen dazu konfiguriert ist, das RF-Fallenpotential einer jeweiligen Ionenfalle der Mehrzahl von lonenfallen bereitzustellen, wobei das jeweilige RF-Fallenpotential über der Hauptoberfläche des ersten Substrats (1a) ist,
eine Mehrzahl von DC-Elektrodensätzen, die den DC-Elektrodensatz enthält, wobei jedes der Mehrzahl von zweiten Substraten eine oder mehrere, optional alle, DC-Elektroden eines jeweiligen Satzes der Mehrzahl von DC-Elektrodensätzen trägt,
wobei jeder der Mehrzahl von DC-Elektrodensätze dazu konfiguriert ist, ein DC-Fallenpotential einer jeweiligen Ionenfalle der Mehrzahl von lonenfallen bereitzustellen, wobei das jeweilige DC-Fallenpotential über der Hauptoberfläche des jeweiligen zweiten Substrats ist, das eine oder mehrere der DC-Elektroden des entsprechenden DC-Elektrodensatzes trägt.

15. Verfahren (200) zum Herstellen eines lonenfallenapparates, umfassend:
Bereitstellen (210) eines ersten Substrats, das eine Hauptoberfläche umfasst,
Bereitstellen (220) eines RF-Elektrodensatzes, wobei alle RF-Elektroden des RF-Elektrodensatzes von dem ersten Substrat getragen werden,
wobei der RF-Elektrodensatz dazu konfiguriert ist, ein RF-Fallenpotential einer Ionenfalle bereitzustellen, wobei das RF-Fallenpotential über der Hauptoberfläche des ersten Substrats ist,
Bereitstellen (230) mindestens eines von: einem optischen Waveguide und einer Mikrowellenelektrode,
wobei der optische Waveguide und/oder die Mikrowellenelektrode von dem ersten Substrat getragen werden,
Bereitstellen (240) eines zweiten Substrats, das eine Hauptoberfläche umfasst,
Bereitstellen (250) eines DC-Elektrodensatzes, wobei eine oder mehrere, optional alle DC-Elektroden des DC-Elektrodensatzes von dem zweiten Substrat getragen werden,
wobei der DC-Elektrodensatz dazu konfiguriert ist, ein DC-Fallenpotential der Ionenfalle bereitzustellen, wobei das DC-Fallenpotential über der Hauptoberfläche des zweiten Substrats ist,
Bereitstellen (260) der Ionenfalle zwischen der Hauptoberfläche des ersten Substrats und der Hauptoberfläche des zweiten Substrats,
wobei das Bereitstellen der Ionenfalle das derartige Anordnen des ersten Substrats und des zweiten Substrats in Bezug zueinander umfasst, sodass die Hauptoberflächen einander zugewandt sind,
wobei der optische Waveguide dazu konfiguriert ist, einen optischen Zugang zu einem Ion bereitzustellen, das in der Ionenfalle gefangenen ist,
wobei die Mikrowellenelektrode dazu konfiguriert ist, ein Mikrowellenfeld bereitzustellen, das dazu konfiguriert ist, eine Gatter-Operation an einem Ion durchzuführen, das in der Ionenfalle gefangen ist, wobei die Mikrowellenelektrode optional dazu konfiguriert ist, ein magnetisches Mikrowellen-Nahfeld in der Ionenfalle zu erzeugen, wobei das magnetische Mikrowellen-Nahfeld einen Gradienten umfasst.

## Revendications

1. Un appareil (100) formant piège à ions, comprenant :
un premier substrat (1) et un deuxième substrat (8), chacun comprenant une surface principale respective (1a, 8a), le premier substrat (1) et le deuxième substrat (8) étant agencés de telle sorte que les surfaces principales (1a, 8a) soient tournées l'une vers l'autre,
un piège à ions (50) situé entre la surface principale du premier substrat (1a) et la surface principale du deuxième substrat (8a),
un ensemble d'électrodes RF, le premier substrat (1) supportant toutes les électrodes RF (13) de l'ensemble d'électrodes RF,
l'ensemble d'électrodes RF étant configuré pour fournir le potentiel de piégeage RF du piège à ions (50), le potentiel de piégeage RF étant au-dessus de la surface principale du premier substrat (1a),
un ensemble d'électrodes à CC, le deuxième substrat (8) supportant une ou plusieurs électrodes à CC (6), optionnellement toutes ces électrodes, de l'ensemble d'électrodes à CC,
l'ensemble d'électrodes à CC étant configuré pour fournir un potentiel de piégeage à CC du piège à ions (50), le potentiel de piégeage à CC étant au-dessus de la surface principale du deuxième substrat (8a),
le premier substrat (1) supportant en outre au moins un des éléments suivants :
un guide d'ondes optiques (10), configuré pour fournir un accès optique à un ion (14) piégé dans le piège à ions (50), et
une électrode micro-ondes (16) configurée pour fournir un champ micro-ondes configuré pour effectuer une opération de grille sur un ion (14) piégé dans le piège à ions (50), l'électrode micro-ondes (16) étant optionnellement configurée de façon à générer un champ magnétique micro-ondes proche dans le piège à ions (50), le champ magnétique micro-ondes proche comprenant un gradient.

2. L'appareil (100) formant piège à ions selon la revendication 1, dans lequel le premier substrat (1) supporte en outre l'autre élément parmi : le guide d'ondes optiques (10) et l'électrode micro-ondes (16).

3. L'appareil (100) formant piège à ions selon la revendication 1 ou la revendication 2,
dans lequel le premier substrat (1) supporte un guide d'ondes radiofréquence configuré pour fournir un signal radiofréquence à l'une des électrodes RF, et/ou
dans lequel le premier substrat (1) supporte un guide d'ondes micro-ondes configuré pour fournir un signal micro-ondes à l'électrode micro-ondes.

4. L'appareil (100) formant piège à ions selon l'une quelconque des revendications 1 à 3,
dans lequel le premier substrat (1) supporte en outre une électrode à CC (12), configurée pour fournir un potentiel en CC au-dessus de la surface principale du premier substrat (1a).

5. L'appareil (100) formant piège à ions selon l'une quelconque des revendications 1 à 4,
l'appareil (100) formant piège à ions comprenant en outre au moins un détecteur de photons agencé de manière à avoir une ligne de visée directe vers une position d'un ion (14) lorsqu'il est piégé dans le piège à ions (50) et configuré pour recevoir un signal optique de l'ion (14) lorsqu'il est piégé dans le piège à ions (50),
ledit au moins un détecteur de photons étant supporté par le premier substrat (1) et/ou par le deuxième substrat (8).

6. L'appareil (100) formant piège à ions selon l'une quelconque des revendications 1 à 5,
dans lequel le deuxième substrat (8) supporte en outre des composants électroniques intégrés configurés pour fournir une tension en CC à l'une des électrodes à CC (6) supportées par le deuxième substrat (8),
les composants électroniques intégrés comprenant optionnellement un ou plusieurs convertisseurs numériques-analogiques, DAC, (4).

7. L'appareil (100) formant piège à ions selon l'une quelconque des revendications 1 à 6,
dans lequel la tangente de perte du premier substrat (1) est inférieure à la tangente de perte du deuxième substrat (8),
dans lequel, optionnellement, le premier substrat (1) comprend un matériau diélectrique, le matériau diélectrique comprenant optionnellement au moins un parmi ce qui suit : AIN, Al₂O₃, BeO, diamant, SiN et SiO₂, et/ou
dans lequel, optionnellement, le deuxième substrat (8) comprend un matériau semi-conducteur, le matériau semi-conducteur comprenant optionnellement au moins un parmi ce qui suit : silicium, SiC, GaN, graphène.

8. L'appareil (100) formant piège à ions selon l'une quelconque des revendications 1 à 7,
dans lequel les électrodes RF et/ou les électrodes à CC et/ou l'électrode micro-ondes sont des électrodes multicouches prévues sur le premier/deuxième substrat,
dans lequel une ou plusieurs des électrodes multicouches comprennent au moins une couche diélectrique entre les couches d'électrodes de l'électrode multicouche respective.

9. L'appareil (100) formant piège à ions selon l'une quelconque des revendications 1 à 8,
l'appareil (100) formant piège à ions comprenant en outre au moins un élément d'espacement (7), ledit au moins un élément d'espacement (7) étant configuré pour définir une relation de position entre le premier substrat (1) et le deuxième substrat (8),
le premier substrat (1) et/ou le deuxième substrat (8) étant optionnellement montés sur ledit au moins un élément d'espacement (7).

10. L'appareil (100) formant piège à ions selon la revendication 9, dans lequel ledit au moins un élément d'espacement (7) supporte un détecteur de photons agencé pour avoir une ligne de visée directe vers une position d'un ion (14) lorsqu'il est piégé dans le piège à ions (50) et configuré de façon à recevoir un signal optique de l'ion (14) lorsqu'il est piégé dans le piège à ions (50).

11. L'appareil (100) formant piège à ions selon l'une quelconque des revendications 1 à 10,
dans lequel le deuxième substrat (8) comprend un trou (2) et dans lequel l'appareil (100) formant piège à ions est configuré pour relier de la lumière provenant du guide d'ondes optiques (10), supporté par le premier substrat (1), à une position d'un ion (14) lorsqu'il est piégé dans le piège à ions (50), et de l'ion (14) dans le trou (2), et/ou
dans lequel le premier substrat (1) comprend un trou et dans lequel l'appareil (100) formant piège à ions est configuré pour relier de la lumière provenant du guide d'ondes optiques (10), supporté par le premier substrat (1), à une position d'un ion (14) lorsqu'il est piégé dans le piège à ions (50), et de l'ion (14) dans le trou.

12. L'appareil (100) formant piège à ions selon l'une quelconque des revendications 1 à 11,
l'appareil (100) formant piège à ions comprenant une pluralité de deuxièmes substrats, y compris le deuxième substrat (8), chacun des deuxièmes substrats supportant au moins une électrode à CC de l'ensemble d'électrodes à CC,
l'appareil (100) formant piège à ions comprenant un espace entre deux des deuxièmes substrats,
l'appareil (100) formant piège à ions étant configuré pour relier de la lumière provenant du guide d'ondes optiques (10), supporté par le premier substrat (1), à une position d'un ion (14) lorsqu'il est piégé dans le piège à ions (50), et de l'ion (14) dans l'espace.

13. L'appareil (100) formant piège à ions selon l'une quelconque des revendications 1 à 12,
l'appareil (100) formant piège à ions comprenant en outre un cryostat et le piège à ions (50) étant configuré pour fonctionner à des températures cryogéniques, et/ou
le piège à ions (50) étant configuré pour fonctionner à des températures supérieures à 273 K.

14. L'appareil (100) formant piège à ions selon l'une quelconque des revendications 1 à 13, comprenant :
une pluralité de deuxièmes substrats, incluant le deuxième substrat (8), chaque substrat de la pluralité de deuxièmes substrats comprenant une surface principale respective, chaque substrat parmi les deuxièmes substrats étant agencé de telle sorte que sa surface principale respective soit tournée vers la surface principale du premier substrat (1a),
une pluralité de pièges à ions, chaque piège de la pluralité de pièges à ions étant situé entre la surface principale du premier substrat (1a) et la surface principale d'un ou plusieurs substrats de la pluralité de deuxièmes substrats,
une pluralité d'ensembles d'électrodes RF, incluant l'ensemble d'électrodes RF, le premier substrat (1) supportant toutes les électrodes RF de la pluralité d'ensembles d'électrodes RF,
chaque ensemble de la pluralité d'ensembles d'électrodes RF étant configuré de façon à fournir le potentiel de piégeage RF d'un piège à ions respectif de la pluralité de pièges à ions, le potentiel de piégeage RF respectif étant au-dessus de la surface principale du premier substrat (1a),
une pluralité d'ensembles d'électrodes à CC, comprenant l'ensemble d'électrodes à CC, chaque substrat de la pluralité de deuxièmes substrats supportant une ou plusieurs électrodes à CC, optionnellement toutes les électrodes, d'un ensemble respectif de la pluralité d'ensembles d'électrodes à CC,
chaque ensemble de la pluralité d'ensembles d'électrodes à CC étant configuré pour fournir un potentiel de piégeage à CC d'un piège à ions respectif de la pluralité de pièges à ions, le potentiel de piégeage à CC respectif étant au-dessus de la surface principale du deuxième substrat respectif supportant une ou plusieurs des électrodes à CC de l'ensemble d'électrodes à CC correspondant.

15. Un procédé (200) de production d'un appareil formant piège à ions, comprenant :
le fait (210) de se mettre à disposition un premier substrat comprenant une surface principale,
le fait (220) de se mettre à disposition un ensemble d'électrodes RF, toutes les électrodes RF de l'ensemble d'électrodes RF étant supportées par le premier substrat,
l'ensemble d'électrodes RF étant configuré pour fournir un potentiel de piégeage RF d'un piège à ions, le potentiel de piégeage RF étant au-dessus de la surface principale du premier substrat,
le fait (230) de se mettre à disposition au moins un parmi : un guide d'ondes optiques et une électrode micro-ondes,
le guide d'ondes optiques et/ou l'électrode micro-ondes étant supportés par le premier substrat,
le fait (240) de se mettre à disposition un deuxième substrat comprenant une surface principale,
le fait (250) de se mettre à disposition un ensemble d'électrodes à CC, une ou plusieurs électrodes à CC de l'ensemble d'électrodes à CC, optionnellement toutes les électrodes, étant supportées par le deuxième substrat,
l'ensemble d'électrodes à CC étant configuré pour fournir un potentiel de piégeage à CC du piège à ions, le potentiel de piégeage à CC étant au-dessus de la surface principale du deuxième substrat,
le fait (260) de placer le piège à ions entre la surface principale du premier substrat et la surface principale du deuxième substrat,
la mise à disposition du piège à ions comprenant le fait d'agencer le premier substrat et le deuxième substrat l'un par rapport à l'autre de telle sorte que les surfaces principales soient tournées l'une vers l'autre,
le guide d'ondes optiques étant configuré pour fournir un accès optique à un ion piégé dans le piège à ions,
l'électrode à micro-ondes étant configurée pour fournir un champ micro-ondes configuré pour effectuer une opération de grille sur un ion piégé dans le piège à ions, l'électrode à micro-ondes étant optionnellement configurée de façon à générer un champ magnétique micro-ondes proche dans le piège à ions, le champ magnétique micro-ondes proche comprenant un gradient.
